# EUROPÄISCHE PATENTSCHRIFT

(11) **EP 2 994 379 B1**
(45) Veröffentlichungstag und Bekanntmachung des Hinweises auf die Patenterteilung: **01.05.2019**
(21) Anmeldenummer: 14717112.8
(22) Anmeldetag: 31.03.2014
(51) Int. Cl.: B63H 1/28, B63H 5/16

(54) **VORRICHTUNG ZUR VERRINGERUNG DES ANTRIEBSLEISTUNGSBEDARFS EINES WASSERFAHRZEUGES**
APPARATUS TO REDUCE REQUIRED PROPULSION POWER OF WATERBORNE VESSEL
DISPOSITIF DE REDUCTION DE PUISSANCE DE PROPULSION D'UNE EMBARCATION

(30) Priorität: 06.05.2013 DE 202013101943 U
(43) Veröffentlichungstag der Anmeldung: 16.03.2016
(73) Patentinhaber: Becker Marine Systems GmbH, 21079 Hamburg (DE)
(72) Erfinder: LEHMANN, Dirk, 21423 Winsen / Luhe (DE); MEWIS, Friedrich, 01219 Dresden (DE)
(74) Vertreter: RGTH
(86) Internationale Anmeldenummer: PCT/EP2014/056412
(87) Internationale Veröffentlichungsnummer: WO 2014/180605

(56) Entgegenhaltungen:
- KR-A- 20020 042 974
- KR-A- 20100 097 000
- KR-A- 20120 068 250
- KR-A- 20120 124 205
- Becker Marine: "Becker Marine Unveils New Energy-Saving Device", worldmaritimenews.com World Maritime News, 15. Februar 2013 (2013-02-15), XP055128037, Gefunden im Internet: URL:http://worldmaritimenews.com/archives/ 76721/germany-becker-marine-unveils-new-en ergy-saving-device/ [gefunden am 2014-07-10]
- Fathomshipping: "Propulsion-Enhancing Fins Installed on Hamburg Süd Containerships", gCaptain.com FATHOM SHIPPING, 8. März 2013 (2013-03-08), XP055128065, Gefunden im Internet: URL:http://gcaptain.com/propulsion-enhanci ng-fins-installed/ [gefunden am 2014-07-10]

## Beschreibung

Die Erfindung betrifft eine Vorrichtung zur Verringerung des Antriebsleistungsbedarfs eines Wasserfahrzeuges, insbesondere eines Schiffes. Die Vorrichtung gemäß der Erfindung ist insbesondere geeignet für ein Antriebssystem eines Wasserfahrzeuges zur Verbesserung der Energieeffizienz.

Aus dem Stand der Technik sind Vorrichtungen zur Verringerung des Antriebsleistungsbedarfs eines Wasserfahrzeuges bekannt.

In dem Artikel 11Becker Marine Unveils New Energy-Saving Device", World Maritime News, 15. Februar 2013, wird eine Vordüse für große Schiffe beschrieben, wobei die Vordüse Innenfins und Außenfins aufweist.

Die KR 2010 0097000 A zeigt von einem Schiffskörper frei abstehende Fins.

Die KR 2002 0042974 A beschreibt einen vor einem Schiffspropeller angeordneten Stator mit vom Schiffskörper abstehenden Fins.

In der KR 2012 0068250 A wird eine Anordnung mit von einem Stevenrohr nach oben abstehenden Fins gezeigt, wobei unterhalb des Stevenrohrs sowie am Stevenrohr angeordnet ein umfänglich geschlossener Düsenausschnitt angebracht ist.

In der KR 2012 0124205 A wird eine bogenförmig ausgebildete und oberhalb eines Stevenrohrs angeordnete Strömungsleitfläche sowie davon nach außen abstehende Fins gezeigt.

Bei der EP 2 100 808 A1 umfasst eine solche Vorrichtung beispielsweise eine Vordüse. Diese Vordüse ist, insbesondere in geringer Entfernung bzw. unmittelbar, vor dem Propeller in Schifffahrtsrichtung betrachtet angebracht. Ferner sind in der Vordüse Fins, d. h. (Leit-)Flossen bzw. Tragflügel, angeordnet. Die Vordüse hat im Wesentlichen die Form eines flachen Kegelausschnittes, wobei beide Öffnungen, sowohl die Wassereintritts- sowie auch die Wasseraustrittsöffnung, als im wesentlichen kreisrunde Öffnung ausgebildet sind und die Wassereintrittsöffnung einen größeren Durchmesser als die Wasseraustrittsöffnung aufweist. Dadurch ist es möglich, die Propellerzuströmung zu verbessern sowie durch die in der Vordüse installierten Fins Verluste im Propellerstrahl durch gezielte Vordrallerzeugung zu verringern. Durch ein derartiges System kann eine deutliche Verringerung des Antriebsleistungsbedarfs und daher ein Einsparen von Kraftstoff erreicht werden.

Die vorbekannte, oben beschriebene Vorrichtung weist jedoch einen relativ großen Widerstand für die Propellerzuströmung auf, so dass sich die Verringerung des Antriebsleistungsbedarfs in relevantem Ausmaße vorwiegend nur bei langsameren bzw. völligeren Schiffen einstellt, so dass die bekannte Vorrichtung auch in der Regel nur bei derartigen Schiffen eingesetzt wird.

Daher ist es Aufgabe der vorliegenden Erfindung, eine Vorrichtung zur Verringerung des Antriebsleistungsbedarfs eines Wasserfahrzeuges anzugeben, die insbesondere auch wirkungsvoll bei schnellen und sehr schnellen Wasserfahrzeugen, beispielsweise Schiffen mit einer Geschwindigkeit von 20 Knoten oder mehr bzw. 25 Knoten und mehr, einsetzbar ist.

Diese Aufgabe wird dadurch gelöst, dass bei einer Vorrichtung zur Verringerung des Antriebsleistungsbedarfs eines Wasserfahrzeugs, die eine Strömungsleitfläche umfasst, mindestens ein erster Fin von der Strömungsleitfläche derart vorsteht, das ein erstes Ende des ersten Fins an der Strömungsleitfläche befestigt ist und ein zweites Ende des ersten Fins als freies Ende ausgebildet ist.

Die Strömungsleitfläche kann einteilig beziehungsweise einstückig ausgebildet sein, oder aus mehreren Einzelteilen zu einer Strömungsleitfläche zusammengesetzt sein, wobei die Einzelteile bevorzugt miteinander beziehungsweise mit der Schiffshülle verschweißt sind.

Die Strömungsleitfläche kann grundsätzlich alle möglichen Formen aufweisen. Dabei ist die Strömungsleitfläche derart angeordnet und ausgebildet, dass durch sie die Wasserströmung zumindest teilweise auf einen Propeller geleitet wird. Beispielsweise kann die Strömungsleitfläche die Form einer quadratischen oder rechteckigen Platte aufweisen. Ferner sind bogenförmige oder gewölbte Ausbildungen denkbar. Im Querschnitt kann eine bogenförmig ausgebildete Strömungsleitfläche einen Kreisaus- schnitt, einen Ellipsenausschnitt oder auch eine anderweitig gebogene Form aufwei- sen. Die Strömungsleitfläche weist in Strömungsrichtung, beziehungsweise in Fahrt- richtung des Wasserfahrzeugs, eine Länge auf. Ferner weist die Strömungsleitfläche bei einer plattenförmigen Ausgestaltung eine Breite, beziehungsweise bei einer bo- genförmigen Ausgestaltung eine Bogenlänge auf. Die Dicke der Strömungsleitfläche wird im Folgenden als Profildicke bezeichnet. Sowohl die Länge, sowie auch die Breite beziehungsweise Bogenlänge und die Profildicke können im gesamten Bereich der Strömungsleitfläche konstant sein oder unterschiedliche Werte aufweisen. Beispielsweise kann die Strömungsleitfläche auch profiliert ausgebildet sein. Dabei könnte zum Beispiel eine Kante der Strömungsleitfläche abgerundet ausgebildet sein und eine dünnere Profildicke aufweisen als der mittlere Bereich der Strömungsleitfläche.

Der erste Fin ist erfindungsgemäß an einem ersten Ende in geeigneter Weise mit der Strömungsleitfläche verbunden, beziehungsweise an der Strömungsleitfläche befestigt. Beispielsweise kann der erste Fin an seinem ersten Ende mit der Strömungsleit- fläche verschweißt oder angeflanscht sein. Das zweite Ende des ersten Fins ist erfindungsgemäß als freies Ende ausgebildet. Somit kann der erste Fin von der Strömungsleitfläche in jeder beliebigen Richtung vorstehen, wobei das zweite Ende des ersten Fins nicht mit der Strömungsleitfläche verbunden ist oder anderweitig am Schiffskörper befestigt ist. Unter dem Begriff ₁₁Fin" ist eine Leitflosse, beziehungsweise ein Tragflügel zu verstehen, der bevorzugterweise an der Strömungsleitfläche feststehend angeordnet ist. Dabei kann unter dem Begriff ₁₁Fin" grundsätzlich jede die Propellerzuströmung beeinflussende Leiteinrichtung verstanden werden, wobei der Fin in der Regel ein Tragflügelprofil aufweist, das heißt, eine Saug- und eine Druckseite umfasst. Somit sind Fins im vorliegenden Zusammenhang Strömungsleitflächen im Sinne von Statoren, die an der Strömungsleitfläche angeordnet sind und die Propellerzuströ- mung beeinflussen. Insbesondere ist es bevorzugt, dass die Fins eine, insbesondere kreisbogenförmig, nach außen gewölbte Saugseite und eine im Wesentlichen ebene Druckseite aufweisen.

Das Profil des ersten Fins kann über seine Länge betrachtet gleichmäßig oder auch unterschiedlich sein. Insbesondere kann das Profil entlang der Längsrichtung des ersten Fins betrachtet in sich gedreht, das heißt getwisted, sein. Somit dient der erste Fin zusätzlich zur Strömungsleitfläche ebenfalls als Leitfläche für die Wasserströmung, wobei die Strömungsleitfläche und der erste Fin in einem Winkel zueinander angeordnet sind und bevorzugterweise der erste Fin kleiner ausgebildet ist als die Strömungsleitfläche. Unter Länge des ersten Fins ist der Abstand zwischen dem ersten Ende und dem zweiten Ende des ersten Fins zu verstehen. Unter Tiefe des ersten Fins ist die Tiefe des Fins in Längsrichtung der Strömungsleitfläche, das heißt in Fahrtrichtung des Wasserfahrzeugs, zu verstehen. Die Dicke des Fins wird im Folgenden als Profildicke bezeichnet.

Unter erster Fin sind im Sinne der vorliegenden Erfindung alle Fins zu verstehen, welche von der Strömungsleitfläche vorstehen und mit einem ersten Ende mit der Strömungsleitfläche verbunden sind und deren zweites Ende als freies Ende ausgebildet ist. Bevorzugterweise können mehrere derartige erste Fins vorgesehen sein.

Ferner ist mindestens ein zweiter Fin vorgesehen, welcher von der Strömungsleitfläche vorsteht. Dabei ist der zweite Fin mit seinem ersten Ende an der Strömungsleitfläche angeordnet, beziehungsweise an dieser befestigt und mit seinem zweiten Ende an einem Wellenlager, insbesondere Stevenrohr, angeordnet, beziehungsweise befestigt. Somit ist der zweite Fin ausgehend von der Strömungsleitfläche zur Propellerachse hingerichtet, und weist im Gegensatz zum ersten Fin kein freies Ende auf, sondern ist mit dem Schiffskörper oder dem Wellenlager verbunden. Somit verläuft der zweite Fin zwischen zwei festen Lagerpunkten vom Wellenlager bis zur Strömungsleitfläche. Zwischen den beiden Enden weist der zweite Fin vorzugsweise eine Druckseite, eine Saugseite, eine Nasenleiste und eine Endleiste auf. Diese Ausbildung gilt auch analog für den ersten Fin, welcher mit einem freien Ende von der Strömungsleitfläche nach außen vorsteht. Je nach Gestaltung des Schiffskörpers kann der zweite Fin anstatt an einem Wellenlager auch direkt am Schiffskörper beziehungsweise an der Beplattung des Schiffskörpers mit seinem zweiten Ende angebracht sein.

Unter "zweiten Fin" sind im Sinne der vorliegenden Erfindung sämtliche Fins zu verstehen, welche von der Strömungsleitfläche vorstehen und mit ihrem ersten Ende mit der Strömungsleitfläche verbunden sind, sowie mit ihrem zweiten Ende mit dem Wellenlager oder dem Schiffskörper verbunden sind. Bevorzugterweise können mehrere derartige zweite Fins vorgesehen sein.

Der erste Fin weist eine größere Länge auf als der zweite Fin. Erfindungsgemäß ist die Länge des ersten Fins mindestens eineinhalbmal, bevorzugt mindestens zweimal so groß sein, wie die Länge des zweiten Fins. Durch diese Ausführungsform wird eine verbesserte Wirkung in Bezug auf die Antriebsleistungsverringerung und in Bezug auf die Stabilität der Vorrichtung erhalten. Durch die Längenverteilung bei dieser Ausführungsform ist die Strömungsleitfläche relativ nah am Wellenlager der Propellerwelle angeordnet, sodass die Vorrichtung einen relativ geringen Widerstand aufweist und auch für sehr schnelle Schiffe verwendbar ist.

Bevorzugterweise ist die Strömungsleitfläche vor einem Propeller angeordnet. Dies bedeutet, dass die Strömungsleitfläche in Fahrtrichtung des Wasserfahrzeugs, beziehungsweise des Schiffs, vor einem Propeller des Wasserfahrzeugs angeordnet ist. Unter der Bezeichnung "in Fahrtrichtung" ist hier die Vorwärtsfahrtrichtung eines Schiffes beziehungsweise eines Wasserfahrzeugs zu verstehen.

Dabei ist es ferner bevorzugt, dass die Strömungsleitfläche beabstandet zu dem Propeller angeordnet ist. Des Weiteren ist es bevorzugt, dass die Strömungsleitfläche beabstandet zu einem Wellenlager, insbesondere einem Stevenrohr, angeordnet ist. Ein Stevenrohr dient zur Lagerung einer Propellerwelle des Propellers des Wasserfahrzeugs beziehungsweise des Schiffs. Hierzu kann die Strömungsleitfläche zumindest bereichsweise oberhalb, unterhalb oder auch seitlich von der Propellerachse angeordnet sein. Ferner kann die Strömungsleitfläche die Propellerachse oder das Wellenlager zumindest teilweise umschließen. Besonders bevorzugterweise ist die Strömungsleitfläche bogenförmig oberhalb und beabstandet zur Propellerachse beziehungsweise zur Propellerwelle angeordnet. Dabei kann die bogenförmig ausgebildete Strömungsleitfläche in Umfangsrichtung auch geschlossen ausgebildet sein. Bevorzugterweise weist eine bogenförmige Strömungsleitfläche allerdings einen Querschnitt eines Achtel-Rings, eines Viertel-Rings auf. Ferner ist es bevorzugt, dass die Strömungsleitfläche einen Querschnitt eines halben Rings, eines Zweidrittel-Rings oder eines Dreiviertel-Rings aufweist.

Ferner kann die Strömungsleitfläche bogenförmig und umfänglich offen ausgebildet sein, wobei die Strömungsleitfläche keinen kreisrunden Querschnitt, sondern beispielsweise einen ellipsenförmigen Querschnitt aufweist. Bevorzugt ist die Strömungsleitfläche konvex gegenüber der Propellerachse ausgebildet.

Bei einer bogenförmigen Ausbildung der Strömungsleitfläche ist die Bogenlänge der Strömungsleitfläche bei Querschnittsbetrachtung bevorzugt kleiner als 80 %, besonders bevorzugt kleiner als 60 %, ganz besonders bevorzugt kleiner als 40 % oder 30 %, des Umfangs der gedanklich umfänglich geschlossenen Strömungsleitfläche.

Grundsätzlich sind aber auch andere Querschnitte denkbar. Beispielsweise könnte die Strömungsleitfläche einen eckigen, beispielsweise einen rechteckigen Querschnitt aufweisen. Ferner wäre eine U-förmige Ausgestaltung der Strömungsleitfläche denkbar.

Durch die Anordnung eines ersten Fins an der Strömungsleitfläche, wobei ein erstes Ende des ersten Fins an der Strömungsleitfläche befestigt ist und ein zweites Ende des ersten Fins als freies Ende ausgebildet ist, kann erreicht werden, dass die Abmessungen, beispielsweise die Länge oder die Breite beziehungsweise die Bogenlänge und/oder die Profildicke der Strömungsleitfläche gegenüber den aus dem Stand der Technik bekannten Vorrichtungen deutlich reduziert werden kann, wobei durch den ersten Fin trotzdem noch diejenigen Bereiche erreicht werden können, in denen die Strömungsverluste besonders hoch sind und in denen ein Vordrall für einen effizienten Betrieb erzeugt werden muss.

Außerdem ist es bevorzugt, dass das zweite Ende des ersten Fins ausgehend von der Strömungsleitfläche von der Propellerachse weg gerichtet ist. Das heißt, dass der Abstand von dem ersten Ende des ersten Fins zur Propellerachse kleiner ist als der Abstand von dem zweiten Ende (freien Ende) des ersten Fins zur Propellerachse.

Somit kann die Strömungsleitfläche beabstandet zur Propellerwelle angeordnet sein, wobei im Gegensatz zum Stand der Technik der Abstand zwischen Propellerwelle und der Strömungsleitfläche geringer ist. Dadurch, dass der erste Fin von der Strömungsleitfläche derart hervorsteht, dass sein zweites Ende von der Propellerachse weggerichtet ist, ist weiterhin sichergestellt, dass der erste Fin weit genug von der Propellerwelle wegreicht (in Radialrichtung von der Propellerwelle aus gesehen) und somit weiterhin die Zuströmung auf den jeweils zugeordneten Propeller positiv beeinflussen kann.

Durch die Anbringung eines Fins an der Strömungsleitfläche kann somit der Abstand von der Strömungsleitfläche zur Propellerwelle sowie auch die Profildicke der Strömungsleitfläche und damit der Widerstand verringert werden, so dass die Vorrichtung nunmehr auch für schnelle und sehr schnelle Schiffe anwendbar ist, wobei die positiven Wirkungen für die Verringerung des Antriebsleistungsbedarfs erhalten bleiben beziehungsweise gegebenenfalls sogar noch verbessert werden. Dadurch, dass der erste Fin von der Strömungsleitfläche nach außen vorsteht und nicht etwa von der Propellernabe beziehungsweise dem Stevenrohr, kann dieser relativ weit nach außen von der Propellerachse aus gesehen reichen und trotzdem noch eine ausreichende Festigkeit, insbesondere in Bezug auf Biegebeanspruchungen, aufweisen.

Bevorzugterweise weist der erste Fin eine größte Profildicke auf, wobei diese größte Profildicke des ersten Fins weniger als 50%, besonders bevorzugterweise weniger als 25%, sowie ganz besonders bevorzugterweise weniger als 15%, des Abstandes zwischen dem ersten Ende und dem zweiten Ende des ersten Fins beträgt. Somit ist die Profildicke des ersten Fins an dessen dickster Stelle geringer als die Länge des ersten Fins zwischen seinem ersten Ende und seinem zweiten Ende.

Grundsätzlich kann die Strömungsleitfläche im parallel zur Propellerachse beziehungsweise parallel zur Propellerwelle angeordnet sein. Dies bedeutet, dass der Abstand zwischen Strömungsleitfläche und Propellerachse in jedem Bereich im Wesentlichen gleich ist. Bevorzugterweise ist die Strömungsleitfläche aber nach hinten oder nach vorne zur Propellerachse hin geneigt angeordnet. Dabei ist die Strömungsleitfläche bevorzugterweise profiliert ausgebildet. Somit weist die Strömungsleitfläche eine Profileintrittskante, welche vom Propeller weggerichtet ist und auf die die Wasserströmung bei Fahrtrichtung des Wasserfahrzeugs in Vorwärtsfahrtrichtung auftritt, auf. Die Profilaustrittskante der Strömungsleitfläche ist zum Propeller hin gerichtet. Bei der Profileintrittskante und der Profilaustrittskante handelt es sich somit um die beiden stirnseitigen Kanten der Strömungsleitfläche. Bei einer nach hinten zur Propellerachse geneigt angeordneten Strömungsleitfläche ist somit der Abstand zwischen Propellerachse und Strömungsleitfläche im Bereich der Profileintrittskante größer als im Bereich der Profilaustrittskante. Durch eine derart geneigte Anordnung der Strömungsleitfläche kann die Zuströmung auf den Propeller in bestimmten Bereichen besonders vorteilhaft beeinflusst werden. Bei einer zur Propellerachse hin geneigt angeordneten Strömungsleitfläche verläuft die Längsachse der Strömungsleitfläche somit nicht parallel zur Propellerachse sondern in einem Winkel und ist dadurch im Bezug auf die Propellerachse schräg gestellt.

Vorzugsweise ist der kürzeste Abstand zwischen Strömungsleitfläche und Propellerachse kleiner als die Hälfte des Propellerdurchmessers, beziehungsweise kleiner als der Radius des Propellers. Bei einer nach hinten zur Propellerachse geneigt angeordneten Strömungsleitfläche ist somit der Abstand zwischen Strömungsleitfläche und Propellerachse im Bereich der Profilaustrittskante der Strömungsleitfläche kürzer als die Hälfte des Propellerdurchmessers.

Ferner ist es zweckmäßig, dass der erste Fin und/oder der zweite Fin im Wesentlichen in Radialrichtung zur Längsachse der Strömungsleitfläche oder zur Propellerachse eines Antriebspropellers eines Wasserfahrzeugs angeordnet sind. Vorzugsweise sind beide Fins, der erste und auch der zweite Fin, in Radialrichtung angeordnet. Grundsätzlich könnten der erste Fin sowie auch der zweite Fin unter unterschiedlichen Winkeln zu ihren jeweiligen Tangenten angeordnet sein. Die Tangente für den ersten Fin läuft durch einen Punkt an der äußeren Wandfläche der Strömungsleitfläche, während die Tangente für den zweiten Fin durch einen Punkt der inneren Wandfläche der Strömungsleitfläche verläuft. Unter äußerer Wandfläche der Strömungsleitfläche ist die von der Propellerachse beziehungsweise Propellerwelle weg gerichtete Wandflä- che zu verstehen. Dagegen ist unter innerer Wandfläche die Wandfläche der Strömungsleitfläche zu verstehen, welche zur Propellerachse, beziehungsweise zur Propellerwelle hingerichtet ist.

Ferner ist bevorzugt, dass die Ausdehnung der einzelnen Fins (erster Fin sowie auch zweiter Fin) in Längsrichtung der Strömungsleitfläche kleiner, beziehungsweise kürzer, als die Länge der Strömungsleitfläche ist. Unter "Ausdehnung" ist dabei der Bereich beziehungsweise die Länge des Längsprofils der Strömungsleitfläche zu verstehen, über die sich die Fins in Strömungsleitflächenlängsrichtung strecken. Besonders bevorzugt ist die Ausdehnung der einzelnen Fins in Längsrichtung der Strömungsleitfläche kleiner als 90 %, ganz besonders bevorzugt kleiner als 80 % oder auch kleiner als 60 % der Länge der Strömungsleitfläche. Die Längsrichtung entspricht im Wesentlichen der Strömungsrichtung. Weiterhin ist es bevorzugt, dass die Fins im Wesentlichen im hinteren Bereich, das heißt, in dem Propeller zugewandten Bereich, der Strömungsleitfläche angeordnet sind. Grundsätzlich wäre jedoch auch eine Ausbil- dung der Fins über die gesamte Ausdehnung der Strömungsleitfläche in Längsrichtung oder auch eine mittige oder vordere Anordnung der Fins in Bezug auf die Fahrtrich- tung möglich.

Die jeweiligen beiden ersten Enden des ersten und des zweiten Fins sind an der Strömungsleitfläche befestigt. Vorteilhafterweise kann das erste Ende des ersten Fins entweder an der äußeren Wandfläche der Strömungsleitfläche befestigt sein, beispielsweise durch Anflanschen oder auch in das Strömungsleitflächenprofil, das heißt, die Wand der Strömungsleitfläche, hineingeführt sein. Alternativ ist auch eine Durchführung des ersten Fins durch das Leitflächenprofil beziehungsweise die Strömungsleitfläche möglich. Das erste Ende des ersten Fins bildet somit die Wurzel des ersten Fins und das zweite Ende bildet die Spitze des ersten Fins.

Sämtliche beschriebenen Ausgestaltungsmöglichkeiten für den ersten Fin sind analog auch für die Ausgestaltung des zweiten Fins und umgekehrt übertragbar beziehungsweise dort anwendbar.

Die Strömungsleitfläche kann bevorzugt über den zweiten Fin mit dem Schiffskörper verbunden sein. Zusätzlich oder alternativ kann die Strömungsleitfläche auch über weitere Verbindungsmittel, beispielsweise unterhalb oder oberhalb der Strömungsleitfläche angeordnete ₁₁Brackets" beziehungsweise Halteklammern oder auch Wellenbockarme, mit dem Schiffskörper verbunden sein. Die Wellenbockarme könnten, zumindest bereichsweise, ebenfalls als Fins ausgebildet sein.

In einer bevorzugten Ausführungsform sind mehrere erste und zweite Fins vorgesehen. Dies bedeutet, dass mehrere Fins vorgesehen sind, welche von der Strömungsleitfläche derart nach außen vorstehen, dass sie mit ihrem jeweiligen ersten Ende mit der Strömungsleitfläche verbunden sind und mit ihrem jeweiligen zweiten Ende frei stehend angeordnet sind. Ferner sind mehrere Fins vorgesehen, welche mit ihrem ersten Ende mit der Strömungsleitfläche verbunden sind und mit ihrem zweiten Ende mit dem Schiffskörper oder der Propellerwelle verbunden sind. Insbesondere ist es bevorzugt, dass eine gleiche Anzahl von ersten Fins und von zweiten Fins vorgesehen ist. Grundsätzlich wäre aber auch die Vorsehung einer ungleichen Anzahl von ersten und zweiten Fins möglich.

Es ist besonders bevorzugt, dass die Vorrichtung mindestens drei erste Fins und/oder mindestens drei zweite Fins, bevorzugt drei bis sieben erste Fins und/oder drei bis sieben zweite Fins, aufweist. Auch kann in einer bevorzugten Ausführungsform eine ungerade Anzahl von ersten Fins und/oder zweiten Fins vorgesehen sein.

Ferner ist es bevorzugt, dass auf der propelleraufschlagenden Seite der Strömungsleitfläche mehr erste Fins als auf der propellerabschlagenden Seite der Strömungsleitfläche angeordnet sind, und/oder dass auf der propelleraufschlagenden Seite der Strömungsleitfläche mehr zweite Fins angeordnet sind als auf der propellerabschlagenden Seite der Strömungsleitfläche. Unter dem Begriff ₁₁propelleraufschlagende Seite der Strömungsleitfläche" wird diejenige Seite der Strömungsleitfläche verstanden, auf der der von einer Frontalansicht der Strömungsleitfläche hinter der Strömungsleitfläche angeordnete Propeller bei Vorwärtsfahrt von unten nach oben dreht. Entsprechend dreht der Propeller bei der propellerabschlagenden Seite von oben nach unten. Daher ist die vorliegend beschriebene Ausführungsform besonders zweckmäßig einsetzbar bei Strömungsleitflächen, deren mittlere Längsachse gegenüber der Propellerachse nicht seitlich verschoben ist, sondern vielmehr in einer vertikal auf der Propellerachse stehenden Ebene liegt, sodass bei gedachter Teilung der Strömungsleitfläche in zwei Strömungsleitflächenhälften durch eine mittige Vertikalachse eine Hälfte der Strömungsleitfläche auf der propelleraufschlagenden Seite und die andere Hälfte auf der propellerabschlagenden Seite liegt.

Um die Rotationsverluste am Propeller zu minimieren und um die durch die von der Hülle des Schiffs gestörte Propelleranströmung induzierte Verdrillung im Propellerabstrom zu reduzieren, wird durch die an der Strömungsleitfläche angeordneten Fins (erste Fins oder zweite Fins) ein (Vor-) Drall erzeugt, der derart ausgerichtet ist, dass sich hinter dem Propeller im Propellerabstrombereich im Vergleich zu einem Propeller ohne vorangestellte Strömungsleitfläche mit Fins eine geringere Verdrillung der Strömung einstellt. Die Verdrillung im Propellerabstrom ist nunmehr besonders gering, wenn auf der propelleraufschlagenden Seite des Propellers wenigstens ein erster Fin und/oder ein zweiter Fin mehr angeordnet ist, als auf der propellerabschlagenden Seite.

Alternativ oder zusätzlich zur Verteilung der ersten und/oder zweiten Fins auf der propelleraufschlagenden und propellerabschlagenden Seite können die ersten Fins und/oder die zweiten Fins ein asymmetrisches erstes Fin-System beziehungsweise ein asymmetrisches zweitens Fin-System bilden. Hierbei bezieht sich eine Asymmetrie beispielsweise auf eine bezüglich der Propellerachse gerichtete Winkelanordnung der Fins und/oder deren Dimensionierung, wie Länge, Profilquerschnitt oder eine andere Größe. Bei einer Asymmetrie bezüglich der auf die Propellerachse gerichteten Winkelanordnung stellt sich eine ungleiche Winkelteilung zwischen den Achsen der einzelnen ersten Fins und/oder zweiten Fins in Radialrichtung von der Propellerachse betrachtet ein. Auch kann eine asymmetrische Anordnung vorliegen, wenn die vertikale Mittelachse der Strömungsleitfläche als Symmetrieachse herangezogen wird. Diese Symmetrieachse trennt in der Regel gleichzeitig die auf- und abschlagende Seite der Strömungsleitfläche. Hierdurch ergibt sich auf einfach auszubildende und abzuordnende Art und Weise ein besonders wirksames erstes Fin-System beziehungsweise zweites Fin-System.

In einer weiteren bevorzugten Ausführungsform ist der mindestens eine erste Fin in Verlängerung des mindestens einen zweiten Fins angeordnet, so dass beide zusammen einen Gesamt-Fin bilden. So können beispielsweise die Längsachsen des ersten Fins und des zweiten Fins im Wesentlichen aufeinanderstehen und/oder der erste Fin und der zweite Fin auf einer gemeinsamen Radialachse angeordnet sein. Bevorzugt ist das erste Ende des zweiten Fins, welches zweckmäßigerweise an der Innenwandfläche der Strömungsleitfläche angeordnet ist, gegenüberliegend zum ersten Ende des ersten Fins angeordnet, der an der Außenwandfläche der Strömungsleitfläche angeordnet ist, so dass dann nur noch die Strömungsleitfläche zwischen den beiden Fins liegt. Grundsätzlich könnten auch beide Endbereiche jeweils in das Profil der Strömungsleitfläche beziehungsweise in die Strömungsleitfläche eingeführt werden, sodass diese dann gegebenenfalls aneinanderstoßen oder nur noch geringfügig voneinander beabstandet sind. Auch ist es möglich, einen durchgehenden Fin zu verwenden, der durch eine Ausnehmung in der Strömungsleitfläche hindurchgeführt wird und an dem ein Teilabschnitt einen ersten Fin und ein anderer Teilabschnitt einen zweiten Fin bildet. Durch diese bevorzugte Anordnung der beiden Fins ergibt sich strömungstechnisch ein einzelner Fin, der zweckmäßigerweise vom Wellenlager bis zum freien Ende des ersten Fins verläuft. Sind mehrere erste Fins und zweite Fins, insbesondere eine gleiche Anzahl von ersten Fins und zweiten Fins, vorgesehen, sind diese vorteilhafterweise jeweils in Fin-Paaren angeordnet, die dann jeweils Gesamt-Fins bilden. So könnten beispielsweise drei erste Fins und drei zweite Fins zusammen drei Gesamt-Fins bilden.

Im Vergleich zum aus dem Stand der Technik bekannten, reinen Statoranordnungen, beziehungsweise Anordnungen mit radial vom Stevenrohr abstehenden Fins ohne Strömungsleitfläche ergibt sich durch das Vorsehen der Strömungsleitfläche eine deutliche erhöhte Festigkeit der gesamten Anordnung. Hierdurch können die Gesamt-Fins bei einer sichergestellten Dauerfestigkeit ausreichend lang ausgeführt werden, um die Anströmung auf den Propeller optimal zu beeinflussen beziehungsweise einen möglichst optimalen Wirkungsgrad zu erreichen. Bei aus dem Stand der Technik bekannten Anordnungen mit langen Fins ohne Strömungsleitfläche ist eine Dauerfestigkeit häufig nicht gewährleistet.

Die Länge des Gesamt-Fins kann grundsätzlich größer oder kleiner als der Radius eines Propellers des Wasserfahrzeuges sein. Die Länge des Gesamt-Fins wird von der Propellerachse bis zum äußersten (freien) Ende des ersten Fins gemessen, wobei gegebenenfalls die zwischen beiden Fins (erster und zweiter Fin) angeordnete Strömungsleitfläche mit eingerechnet wird. Bevorzugt beträgt die Länge des Gesamt-Fins maximal 90 % des Radius des Propellers, besonders bevorzugt maximal nur 75 %. Jedoch wird eine ausreichende Festigkeit der Vorrichtung sichergestellt.

In einer weiteren bevorzugten Ausführungsform sind der erste Fin und/oder der zweite Fin unter einem Anstellwinkel radial zur Propellerachse angeordnet. Insbesondere können der erste Fin und der zweite Fin unterschiedliche Anstellwinkel aufweisen. Sind mehrere erste Fins und/oder zweite Fins vorgesehen, können diese untereinander auch unterschiedliche Anstellwinkel aufweisen. Durch die Einstellung der unterschiedlichen Anstellwinkel ist eine Optimierung des Vordralles möglich. Der Einstellwinkel wird beispielsweise von einer von der Nasenleiste zur Endleiste des jeweiligen Fins verlaufenden Sehne oder auch der Längsachse des Fins in Querschnittsansicht und der Propellerachse eingeschlossen.

In einer weiteren bevorzugten Ausführungsform weist der erste Fin ein freies Ende auf, welches den am entferntesten angeordneten Bereich des ersten Fins von der Strömungsleitfläche darstellt. An diesem freien Endbereich steht ein Fin-Endstück vom ersten Fin ab. So kann beispielsweise eine Längsachse dieses Fin-Endstückes un- ter einem Winkel zur Längsachse des ersten Fins stehen. Mit dem Begriff ₁₁abstehen- den Fin-Endstück" sind vorliegend grundsätzlich alle im Bereich des freien Endes des ersten Fins angeordneten Bauteile gemeint, die nicht genau in der Verlängerung des ersten Fins angeordnet sind, sondern schräg vom ersten Fin beziehungsweise unter einem bestimmten Winkel vom ersten Fin abstehen, beziehungsweise von der fiktiv verlängerten Profilkontur des ersten Fins abweichen. Das Fin-Endstück steht somit aus der Fin-Ebene hervor. Ein solches abstehendes Fin-Endstück wirkt ähnlich wie von Flugzeugtragflügeln bekannte ₁₁Winglets" und verringert die Wahrscheinlichkeit von sich ablösenden Wirbeln im Endbereich des ersten Fins sowie von im selbigen auftre- tender Gravitation.

Das Fin-Endstück kann unter einem Radius in den freien Endbereich des ersten Fins übergeben. Alternativ kann das Fin-Endstück auch unter einem Winkel am freien Ende des ersten Fins angebracht sein, sodass dann die Fin-Endstückebene und die Ebene über die sich der erste Fin erstreckt unter diesem Winkel aufeinanderstehen.

Grundsätzlich kann das Fin-Endstück zu beiden Seiten, das heißt, sowohl zur Druck- als auch zur Saugseite, des ersten Fins von diesem abstehen oder nur zu einer der beiden Seiten. Bei letzterer Ausführungsform ist es bevorzugt, dass das Fin-Endstück nur zur Saugseite des ersten Fins hin absteht, da hierdurch die größeren hydrodynamischen Effekte in Bezug auf die Verringerung der Wirbelbildung erreicht werden können. Für die Ausführungsform, bei der das Fin-Endstück zu beiden Seiten des ersten Fins absteht beziehungsweise vorsteht, können auch zwei separate Fin-Endstücke vorgesehen sein, die dann jeweils zu einer Seite abstehen. Grundsätzlich ist aber auch bei dieser Ausführungsform eine einstückige Ausführung des Fin-Endstückes möglich.

Zur Sicherstellung eines ausreichend geringen Widerstandes der Vorrichtung kann gemäß einer weiteren Ausführungsform vorgesehen sein, dass die Profildicke der Strömungsleitfläche nicht mehr als 10 %, bevorzugt nicht mehr als 7,5 %, besonders bevorzugt nicht mehr als 6 %, der Länge der Strömungsleitfläche entspricht. Hier sind jeweils die maximale Profildicke und die maximale Ausdehnung in Längsrichtung, das heißt, von der Profileintrittskante zur Profilaustrittskante der Strömungsleitfläche, anzusetzen. Auch hierdurch wird der Widerstand der Vorrichtung weiter reduziert.

In einer weiteren bevorzugten Ausführungsform ist ferner eine Stabilisierungsstrebe vorgesehen, die zwischen Wellenlager und Innenseite der Strömungsleitfläche angeordnet und sowohl am Wellenlager als auch an der Strömungsleitfläche befestigt ist. Eine solche Stabilisierungsstrebe kann vorgesehen werden, wenn je nach örtlichen Gegebenheiten beziehungsweise jeweilige Ausgestaltung der Vorrichtung eine zusätzliche Stabilisierung beziehungsweise Halterung der Vorrichtung beziehungsweise der Strömungsleitfläche gewünscht wird. Die Strebe kann grundsätzlich als normaler Druckbeziehungsweise Zugstab, ohne strömungsleitende Eigenschaften ausgebildet sein. Alternativ kann die Stabilisierungsstrebe selbst auch ein Fin-Profil, das heißt, ein Tragflügelprofil oder Ähnliches, zur gezielten Beeinflussung der Propellerzuströmung, beispielsweise zur Vordrallerzeugung aufweisen.

Der erste Fin und/oder der zweite Fin können ferner gepfeilt ausgebildet sein. Unter dem unter anderem aus der Luftfahrt bekannten Begriff "gepfeilt" ist im vorliegenden Zusammenhang eine Winkelabweichung des ersten Fins und/oder des zweiten Fins in Bezug zu einer Orthogonalen der Längsachse der Strömungsleitfläche zu verstehen. Dabei kann die in Strömungsrichtung betrachtet vordere Kante und/oder hintere Kante der Fins (erster Fin und/oder zweiter Fin) gegenüber der Orthogonalen in einem Winkel angestellt sein (diese Zustände werden auch Vorderkantenpfeilung beziehungsweise Hinterkantenpfeilung genannt).

In einer bevorzugten Ausführungsform ist nur die Vorderkante des ersten Fins und/oder des zweiten Fins gegenüber der Orthogonalen angestellt, beziehungsweise in einem Winkel zur Orthogonalen angeordnet und die Hinterkante in etwa parallel zur Orthogonalen ausgerichtet. Auch kann es Ausführungsformen geben, bei denen nur der erste Fin gepfeilt ausgebildet ist, nicht jedoch der zweite Fin.

Bei einer weiteren bevorzugten Ausführungsform sind sowohl der erste Fin als auch der zweite Fin gepfeilt ausgebildet. Dies kann insbesondere bevorzugt sein, wenn die Strömungsleitfläche mindestens einen Gesamt-Fin aufweist, wobei dann der Gesamt-Fin besonders bevorzugt durchgehend gepfeilt ausgebildet ist, das heißt, mit gleichen Winkelabweichungen der Vorderkanten und/oder Hinterkanten des ersten Fins und des zweiten Fins zur Orthogonalen der Längsachse der Strömungsleitfläche.

Des Weiteren ist es bevorzugt, dass die Strömungsleitfläche als Düse und besonders bevorzugterweise als Vordüse ausgebildet ist. Hierfür ist die Strömungsleitfläche derart geformt, dass sie nicht nur die Eigenschaft besitzt, die Strömung gezielt auf den Propeller zu leiten, sondern zusätzlich auch derart geformt ist, dass die Zuströmgeschwindigkeit zumindest bereichsweise erhöht wird. Dies kann beispielsweise bei einer bogenförmig ausgebildeten Strömungsleitfläche vorgesehen sein, bei der der Radius des Rings (bei Querschnittsbetrachtung) in Längsrichtung der Strömungsleitfläche von vorne nach hinten zum Propeller hin abnimmt.

Unter Vordüse ist eine Düse zu verstehen, welche in Fahrtrichtung des Schiffes beziehungsweise Wasserfahrzeuges vor dem Propeller des Wasserfahrzeuges angeordnet ist.

Bei einer bevorzugten Ausführungsform, wobei die Strömungsleitfläche als Düse oder Vordüse ausgebildet ist, ist innerhalb der Düse beziehungsweise Vordüse kein Propeller, anders als zum Beispiel bei Kortdüsen oder Ruderpropellern angeordnet. Des Weiteren ist auch die Düse beziehungsweise Vordüse, wie auch die nicht als Düse ausgebildete Strömungsleitfläche, beabstandet zum Propeller angeordnet. Die Düse beziehungsweise Vordüse ist derart ausgebildet, dass die hindurchströmende Wasserströmung zumindest teilweise auf den nachstehend angeordneten Propeller geleitet wird. In der Regel wird die Düse beziehungsweise Vordüse eine röhrenförmige Form aufweisen. Es ist jedoch auch grundsätzlich jede anderweitige Querschnittsform, beispielsweise eine eckige Querschnittsform denkbar.

Die Düse beziehungsweise Vordüse kann einteilig beziehungsweise einstückig ausgebildet sein, oder aus mehreren Einzelteilen zu einer Düse beziehungsweise Vordüse zusammengesetzt sein, wobei die Einzelteile bevorzugt miteinander beziehungsweise mit der Schiffshülle verschweißt sind. Bevorzugt ist zumindest ein Teilbereich der Düse beziehungsweise Vordüse unterhalb der Propellerwelle des Schiffspropellers angeordnet.

Grundsätzlich ist es möglich, dass die Düse beziehungsweise Vordüse nur einen Teilausschnitt einer Düse beziehungsweise eines Düsenrings umfasst (zum Beispiel einen Viertel-Düsenring, einen Drittel-Düsenring, einen halben Düsenring, usw.). Bei einer solchen Ausführungsform ist die Düse beziehungsweise Vordüse über den Umfang gesehen offen ausgebildet.

Bevorzugt ist die Düse beziehungsweise Vordüse jedoch in Umfangsrichtung geschlossen ausgebildet. Hierfür kann die Düse beziehungsweise Vordüse in Umfangsrichtung um 360 Grad durchgehend ausgebildet sein. Bei einer mehrteilig ausgebildeten Düse beziehungsweise Vordüse können ferner, insbesondere auch bei geschlossenem Düsenumfang, die Einzelteile der Düse beziehungsweise Vordüse mit der Schiffshülle und/oder dem Stevenrohr verbunden sein, sodass dann die Schiffshülle und/oder das Stevenrohr einen Teil des Düsenumfangs bildet.

Bei sämtlichen vorgenannten Ausführungsformen der Vorrichtung kann die Strömungsleitfläche als Düse beziehungsweise Vordüse ausgebildet sein. Bei einer derartigen Ausgestaltung sind die ersten Fins von der Düse beziehungsweise Vordüse nach außen vorstehend angeordnet. Deshalb werden bei einer derartigen Ausführungsform die ersten Fins auch Außen-Fins genannt. Dagegen sind die zweiten Fins bei Vorsehen einer Strömungsleitfläche als Düse oder Vordüse innerhalb der Düse beziehungsweise Vordüse angeordnet. Diese zweiten Fins werden demnach auch Innen-Fins genannt.

Durch das bevorzugte im Umfang geschlossene Profil der Düse beziehungsweise Vordüse weist diese einen inneren Bereich auf, welcher durch den Düsenmantel einer an den beiden Öffnungen (Wassereintritts- und Wasseraustrittsöffnung) gedanklich geschlossenen Düse beziehungsweise Vordüse eingeschlossen ist. Der mindestens eine Außen-Fin ist nunmehr bevorzugterweise außerhalb dieses inneren Bereichs angeordnet und steht vielmehr von der Vordüse beziehungsweise Düse aus gesehen, nach außen hin vor. Insbesondere kann der mindestens eine Außen-Fin von der Außenseite der Düse beziehungsweise Vordüse vorstehen.

Im Gegensatz zum Stand der Technik wird nunmehr auch außerhalb der Düse beziehungsweise Vordüse ein zur Düse beziehungsweise Vordüse gehörender Fin, der mindestens eine Außen-Fin, vorgesehen. zweckmäßigerweise ist wenigstens ein Endbereich des Außen-Fins an der äußeren Wandfläche der Düse beziehungsweise Vordüse angeordnet und steht von dieser nach außen hin vor. Das heißt, der restliche Bereich des mindestens einen Außen-Fins ist beabstandet von der Düse beziehungsweise Vordüse angeordnet. Durch die erstmalige Anordnung eines Fins außen an einer Düse beziehungsweise Vordüse wird nunmehr erreicht, dass der Durchmesser und/oder die Profildicke der Düse beziehungsweise Vordüse gegenüber den aus dem Stand der Technik bekannten Vorrichtungen deutlich reduziert werden kann und der mindes- tens eine Außen-Fin trotzdem noch diejenigen Bereiche erreicht, in denen die Strömungsverluste besonders hoch sind und in denen ein Vordrall für einen effizienten Betrieb erzeugt werden muss. Würde man die Durchmesser bei den aus dem Stand der Technik bekannten Vorrichtungen einfach nur verringern, würden die Fins im Gegensatz zur vorliegenden Erfindung nicht weit genug von der Propellernabe wegreichen (in Radialrichtung von der Propellernabe ausgesehen) und somit die Zuströmung auf den jeweils zugeordneten Propeller nicht mehr oder nur in geringem Maße positiv beeinflussen.

Durch die Anbringung eines oder mehrerer Außen-Fins an der Außenseite der Vordüse beziehungsweise Düse kann der Durchmesser der Düse beziehungsweise Vordüse und damit deren Widerstand verringert werden, sodass die Vorrichtung nunmehr auch für schnelle und sehr schnelle Schiffe anwendbar ist, wobei die positiven Wirkungen auf die Verringerung des Antriebsleistungsbedarfs erhalten bleiben beziehungsweise gegebenenfalls sogar noch verbessert werden. Dadurch, dass der Außen-Fin von der Düse beziehungsweise Vordüse nach außen vorsteht und nicht etwa von der Propellernabe beziehungsweise dem Stevenrohr, kann dieser relativ weit nach außen von der Propellerachse aus gesehen reichen und trotzdem noch eine ausreichende Festigkeit, insbesondere in Bezug auf Biegebeanspruchungen, aufweisen.

Die Düse beziehungsweise Vordüse kann rotationssymmetrisch oder auch rotationsasymmetrisch ausgebildet sein. Ferner kann die Düse beziehungsweise Vordüse konzentrisch mit der Propellerachse oder auch exzentrisch hierzu angeordnet sein. Insbesondere kann die Rotationsachse und/oder die Längsachse der Düse beziehungsweise Vordüse gegenüber der Propellerachse nach oben und/oder seitlich versetzt angeordnetsein. Ferner kann die Düse beziehungsweise Vordüse derart angeordnet sein, dass ihre Rotationsachse oder ihre Längsachse parallel zur Propellerachse verläuft oder in einem Winkel zur Propellerachse verläuft und somit in Bezug auf die Propellerachse schräg gestellt ist. Bevorzugt ist die Düse beziehungsweise Vordüse ferner in horizontaler Richtung mittig, bezogen auf die Propellerachse, ausgerichtet. Dadurch liegen die Rotationsachse der Düse beziehungsweise Vordüse und die Propellerachse in einer vertikalen Ebene. Grundsätzlich ist jedoch eine verdrehte Anordnung der Düse beziehungsweise Vordüse gegenüber einer durch die Propellerachse verlaufenden Vertikalen beziehungsweise einer Parallelen hierzu möglich.

Die Verschiebung der Düse beziehungsweise Vordüse gegenüber der Propellerachse nach oben und/oder zur Seite, kann insbesondere deswegen vorteilhaft sein, da die Wassergeschwindigkeit aufgrund der Schiffform beziehungsweise der Ausgestaltung des Schiffskörpers im unteren Bereich der Vordüse beziehungsweise des Propellers in der Regel schneller ist als im oberen Bereich. Durch die Verschiebung der Vordüse gegenüber der Propellerachse kann, angepasst an die jeweilige Gestaltung des Schiffskörpers, gegebenenfalls eine Vergleichsmäßigung des Propellerzustroms und somit ein besserer Wirkungsgrad erreicht werden.

zweckmäßigerweise besteht die Vordüse aus einem durchgehenden und/oder einstückigen Ringkörper beziehungsweise Düsenring. Die bevorzugte Ausführungsform kann auch bei Mehrschraubenschiffen eingesetzt werden, wobei dann zweckmäßigerweise jedem Propeller eine Düse beziehungsweise Vordüse zuzuordnen ist. Die der Vorrichtung zugeordneten Propeller sind in der Regel feststehend beziehungsweise lagefixiert am Schiffskörper installiert. Die Vordüse beziehungsweise Düse bildet zusammen mit dem Propeller des Wasserfahrzeuges ein Antriebssystem.

Des Weiteren ist es vorteilhaft, wenn der Durchmesser der Düse beziehungsweise Vordüse nicht mehr als 85%, bevorzugt nicht mehr als 70%, besonders bevorzugt nicht mehr als 50% oder nicht mehr als 35%, desjenigen Durchmessers des Propellers beträgt, dem die Düse beziehungsweise Vordüse zugeordnet ist. Auch hierdurch wird sichergestellt, dass das Düsenprofil beziehungsweise der Düsenring insgesamt nicht zu groß wird, damit der Widerstand der Düse beziehungsweise Vordüse so niedrig ist, dass es möglich ist, die Vorrichtung auch bei schnellen und sehr schnellen Schiffen einzusetzen. Sollte die Düse beziehungsweise Vordüse nicht rotationssymmetrisch beziehungsweise zylindrisch oder kegelförmig ausgebildet sein, kann statt dem Durchmesser die größte Ausdehnung der Düse beziehungsweise Vordüse in Höhe oder Breite ins Verhältnis zum Propellerdurchmesser gesetzt werden. Ferner ist zweckmäßigerweise den Außendurchmesser der Vordüse anzusetzen.

Die Erfindung wird nachfolgend anhand der in der Zeichnung dargestellten Ausführungsbeispiele weiter erläutert. Es zeigen schematisch:
- Fig. 1:: Eine Heckansicht eines unteren Bereiches eines Schiffskörpers mit einer vor dem Propeller angeordneten plattenförmig ausgestalteten Strömungsleitfläche;
- Fig. 2:: eine Heckansicht eines unteren Bereiches eines Schiffskörpers mit einer vor dem Propeller angeordneten bogenförmig ausgebildeten Strömungsleitfläche;
- Fig. 3:: eine Seitenansicht einer Strömungsleitfläche mit einem ersten Fin;
- Fig .4:: eine perspektivische Ansicht einer weiteren Ausführungsform mit bogenförmig ausgestalteter Strömungsleitfläche.
- Fig. 5:: eine Schnittdarstellung eines Fins;
- Fig. 6:: eine Heckansicht eines unteren Bereiches eines Schiffskörpers mit koaxial zum Propeller angeordneter Vordüse;
- Fig. 7:: eine Heckansicht eines unteren Teils eines Schiffskörpers mit gegenüber der Propellerachse nach oben verschobener Vordüse;
- Fig. 8:: eine Seitenansicht einer Vordüse mit Außen-Fin, die gegenüber der Propellerachse geneigt ist;
- Fig. 9:: eine perspektivische Ansicht einer weiteren Ausführungsform der Vorrichtung;
- Fig. 10:: eine Seitenansicht der Vorrichtung aus Fig. 9; und
- Fig. 11:: eine perspektivische Ansicht einer weiteren Ausführungsform der Vorrichtung, installiert an einem Schiffskörper.

Bei den im Folgenden dargestellten, verschiedenen Ausführungsformen sind gleiche Bestandteile mit gleichen Bezugszeichen versehen.

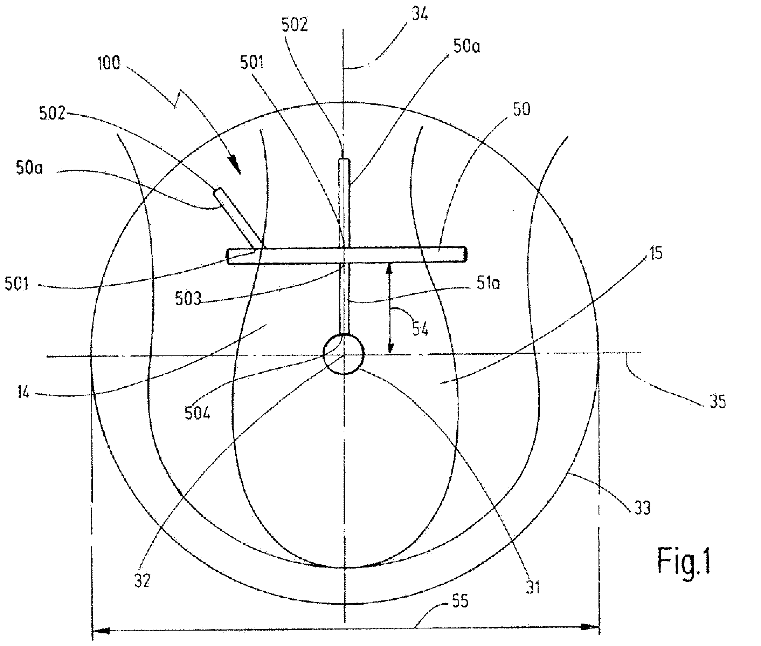

Fig. 1 zeigt eine Heckansicht auf den hinteren unteren Bereich eines Schiffskörpers 30. Vom Schiffskörper 30 steht in etwa in horizontaler Richtung ein als Stevenrohr ausgebildetes Wellenlager 31 vom Heck vor. In der Darstellung der Fig. 1 verläuft das Wellenlager 31 aus der Zeichnungsebene heraus beziehungsweise in diese hinein. In diesem Wellenlager 31 wird eine Propellerwelle (hier nicht gezeigt) gelagert, die entlang der Propellerachse 32 verläuft. Auch die Propellerachse 32 führt in der Darstellung der Fig. 1 aus der Zeichnungsebene heraus beziehungsweise in diese hinein. Der Propeller 33 ist nur schematisch als Propellerkreis angedeutet, da dieser in Fahrtrichtung hinter der Strömungsleitfläche 50 und damit außerhalb der Zeichnungsebene liegt. Das vorliegende Schiff ist ein sogenanntes "Einschraubenschiff" und weist damit nur einen Propeller 33 auf.

Die Strömungsleitfläche 50 ist beabstandet zum Propeller vor dem Propeller 33 angeordnet. Ferner ist die Strömungsleitfläche 50 plattenförmig ausgebildet und erstreckt sich somit auf einer Ebene parallel zur Propellerachse 32. Die Strömungsleitfläche 50 ist wie in Fig. 1 gezeigt, in einem konstanten Abstand 54 zur Propellerachse 32 angeordnet.

Die in Fig. 1 gezeigte Vorrichtung 100 weist zwei von der Strömungsleitfläche 50 nach außen vorstehende erste Fins 50a auf. Jeder dieser beiden ersten Fins 50a ist mit seinem ersten Ende 501 mit der Strömungsleitfläche 50 verbunden. Dass jeweilige zweite Ende 502 der ersten Fins 50a ist als frei stehendes Ende ausgebildet. Des Weiteren weist die in Fig. 1 gezeigte Vorrichtung einen zweiten Fin 51a auf. Dieser zweite Fin 51a ist mit seinem ersten Ende 503 mit der Strömungsleitfläche 50 verbunden. Mit seinem zweiten Ende 504 ist der zweite Fin 51a mit dem Wellenlager 31 verbunden.

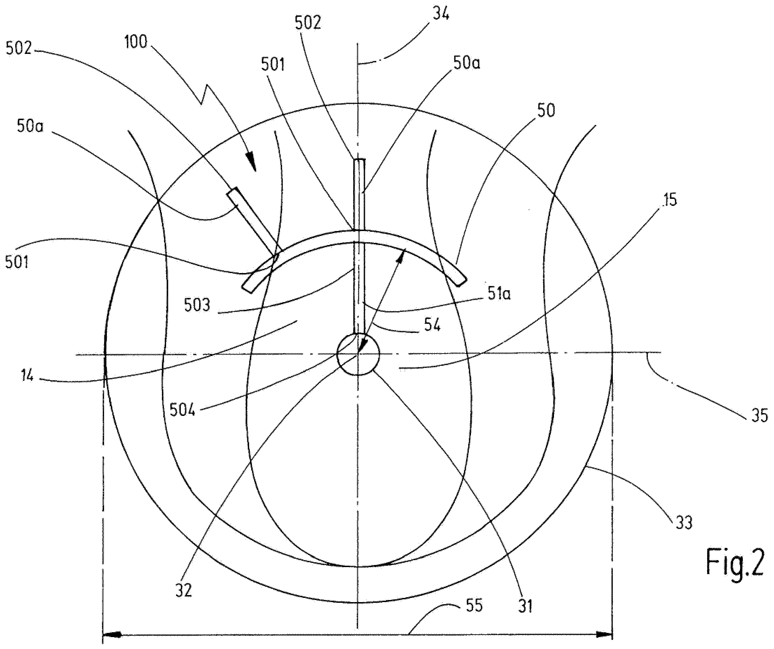

Fig. 2 zeigt eine Heckansicht auf den hinteren Bereich eines Schiffskörpers 30. Die Vorrichtung gemäß Fig. 2 unterscheidet sich von der Vorrichtung gemäß Fig. 1 lediglich darin, dass die Strömungsleitfläche 50 bogenförmig ausgebildet ist.

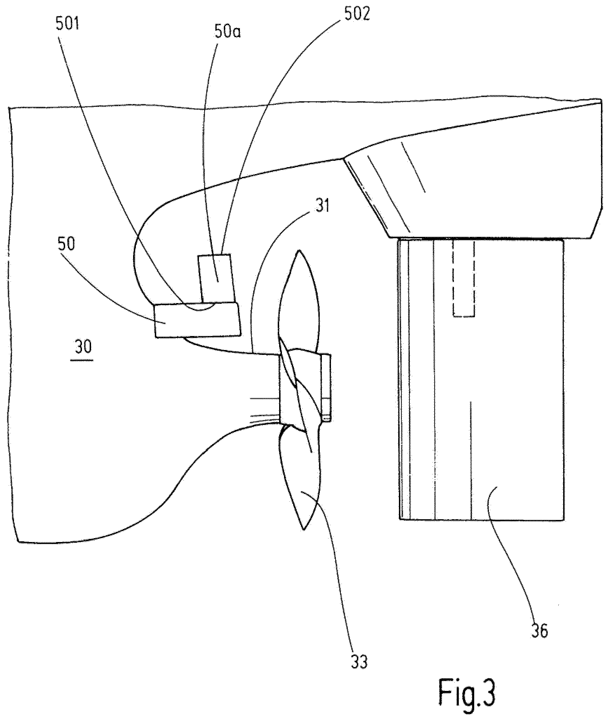

Fig. 3 zeigt eine Seitenansicht auf den unteren Heckabschnitt eines Schiffes. Aus dem Heck eines Schiffskörpers 30 steht in etwa horizontal ein Wellenlager 31, welches als Stevenrohr ausgebildet ist, vor, in dem eine Propellerwelle (hier nicht dargestellt) angeordnet ist. Die Propellerwelle verläuft entlang einer Propellerachse 32. Am Ende des Wellenlagers 31 ist ein Propeller 33 vorgesehen. In Fahrtrichtung vor dem Propel- ler 33 ist ferner beabstandet zum Propeller 33 und vor dem Propeller 33 eine angeordnete Strömungsleitfläche 50 gezeigt. Die Strömungsleitfläche 50 ist wie in Fig. 2 bogenförmig ausgebildet. Des Weiteren ist an der Strömungsleitfläche 50 nach außen, beziehungsweise oben, vorstehend ein erster Fin 50a angeordnet. Der erste Fin 50a ist mit seinem ersten Ende 501 im oberen Bereich der bogenförmig ausgestalteten Strömungsleitfläche 50 mit dieser verbunden, wobei sein zweites Ende 502 als frei stehendes Ende ausgebildet ist.

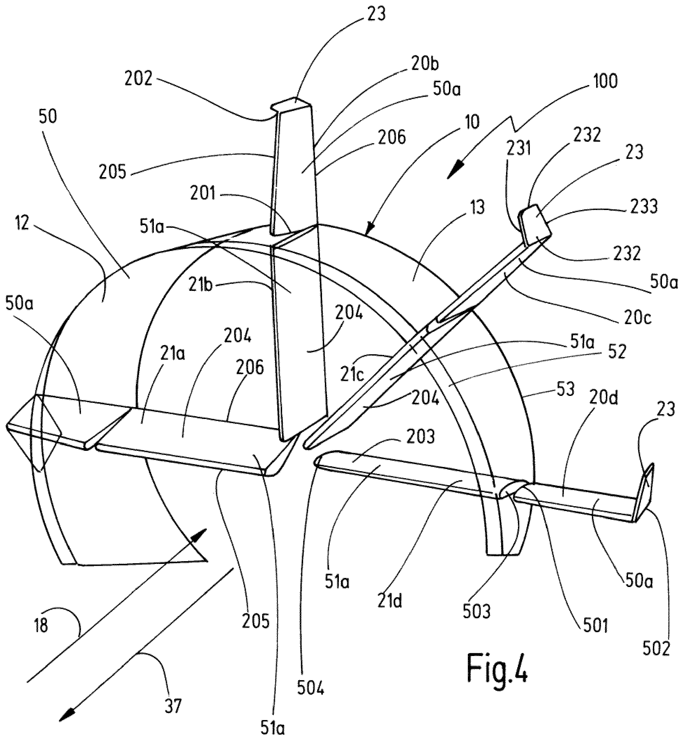

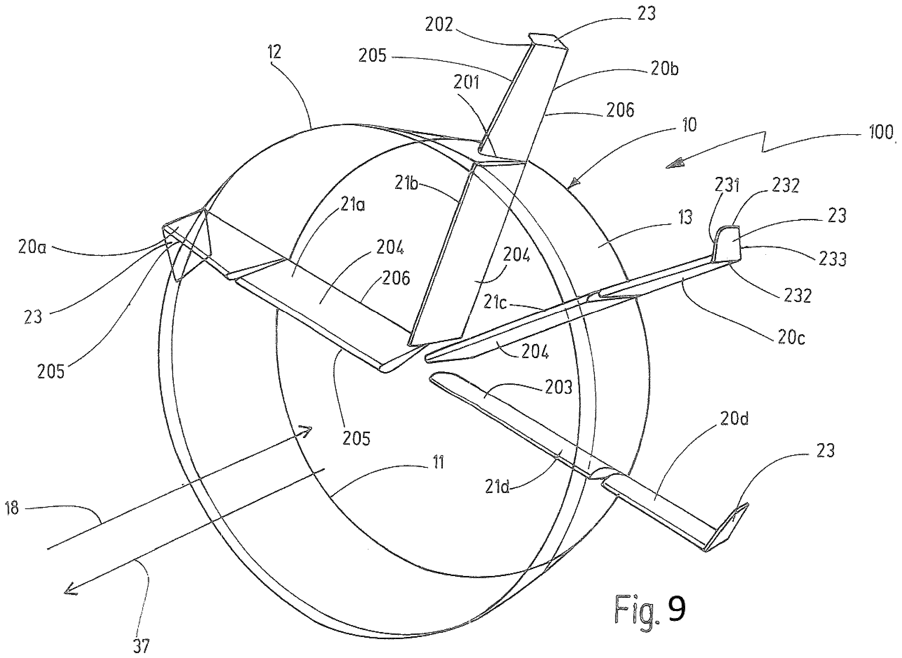

Fig. 4 zeigt eine perspektivische Ansicht einer weiteren Ausführungsform der Vorrichtung 100. Auch diese Vorrichtung 100 umfasst eine in Umfangsrichtung offen ausgebildete Vordüse 10 und vier Außen-Fins 20a bis 20d sowie vier Innen-Fins 21a bis 21d, wobei jeweils ein Fin-Paar 20a, 21a; 20b, 21b; 20c, 21c; 20d, 21d einen Gesamt-Fin bildet. Somit ist gemäß Fig. 4 die Strömungsleitfläche 50 als offener Düsenring ausgebildet. Der offene Düsenring entspricht in etwa einer sogenannten Zweidrittel-Düse, da dieser Düsenring in etwa zwei Drittel einer im Umfang geschlossenen Düse entspricht. Des Weiteren wird auf die Ausführungen zu Fig. 9 verwiesen. In Fig. 9 wird eine ähnliche Ausführungsform gezeigt, wobei allerdings im Gegensatz zur in Fig. 4 gezeigten Ausführungsform die Vorrichtung 100 in Fig. 9 eine in Umfangsrichtung geschlossen ausgebildete Vordüse 10 zeigt.

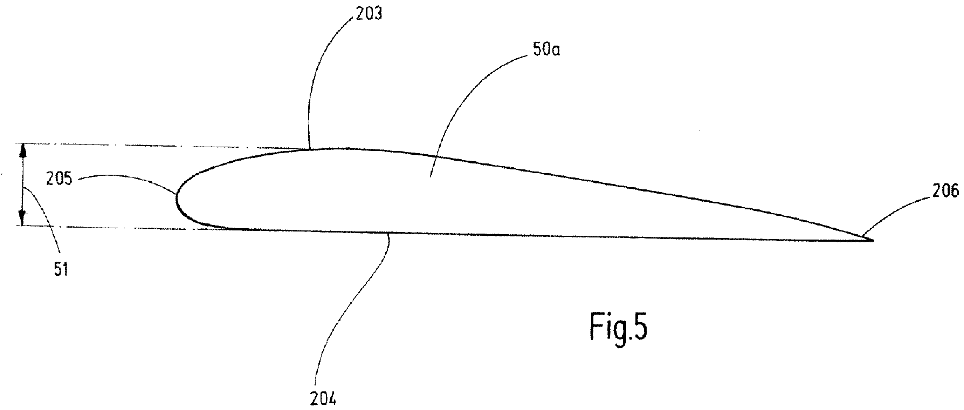

Fig. 5 zeigt eine Querschnittsansicht eines Beispiels eines Fins. Der gezeigte Fin kann grundsätzlich der Querschnitt eines ersten Fins 50a oder auch zweiten Fins 51a sein. In dem in Fig. 5 dargestellten Beispiel ist der gezeigte Fin der erste Fin 50a. Der Fin 50a weist eine in der Zeichnung von Fig. 5 oberhalb angeordnete, gewölbte Saugseite 203 und eine gegenüberliegend angeordnete, im Wesentlichen ebene Druckseite 204 auf. Die abgerundet ausgebildete, vordere Stirnseite 205, die einen Teil der Vorderkante des Fins 50a bildet, würde in einem in einer Vordüse 10 eingebauten Zustand in die Strömung gestellt, d. h. stromaufwärts angeordnet, werden. Dahingehend würde die annähernd spitz zulaufende, rückwärtige Stirnseite 206 (d.r. das Profilende), die ein Teil der Hinterkante des Fins 50a bildet, im in einer Vordüse 10 eingebauten Zustand propellerstromabwärts angeordnet werden.

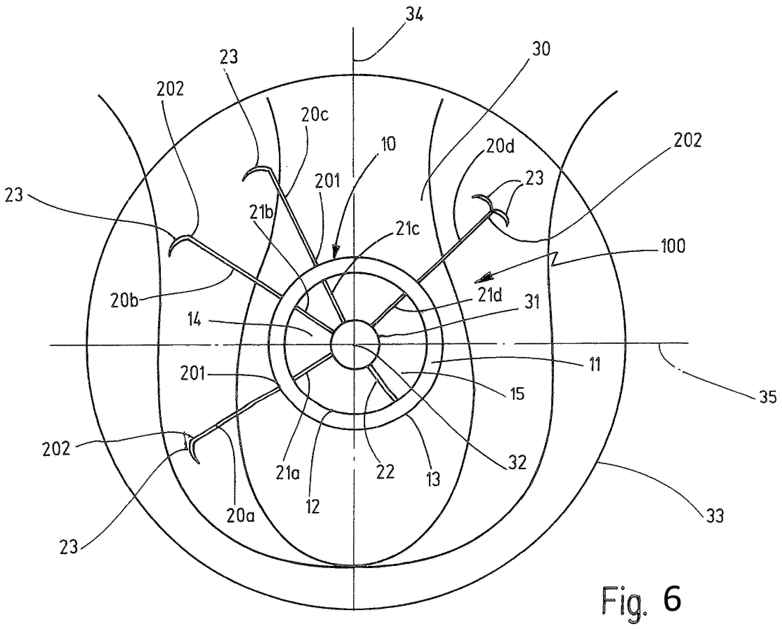

Fig. 6 zeigt eine Heckansicht auf den hinteren unteren Bereich eines Schiffskörpers 30. Vom Schiffskörper 30 steht in etwa horizontaler Richtung ein als Stevenrohr ausgebildetes Wellenlager 31 vom Heck vor. In der Darstellung der Fig. 6 verläuft das Wellenlager 31 aus der Zeichnungsebene heraus bzw. in diese hinein. In dem Wellenlager 31 wird eine Propellerwelle (hier nicht gezeigt) gelagert, die entlang der Propellerachse 32 verläuft. Auch die Propellerachse 32 führt in der Darstellung aus der Fig. 6 aus der Zeichnungsebene heraus bzw. in diese hinein. Die Propellerachse 32 bildet gleichzeitig die Längsachse einer konzentrisch um die Propellerachse 32 angeordneten Vordüse 10. Da die Vordüse 10 im vorliegenden Ausführungsbeispiel als rotationssymmetrischer Körper dargestellt ist, bildet die Propellerachse 32 gleichzeitig auch die Rotationsachse der Vordüse 10. Der Propeller 33 ist nur schematisch als Propellerkreis angedeutet, da dieser in Fahrtrichtung hinter der Vordüse 10 und damit außerhalb der Zeichnungsebene liegt. Das vorliegende Schiff ist ein sogenanntes Einschraubenschiff und weist daher nur einen Propeller 33 auf.

Die Vordüse 10 weist eine umlaufend geschlossene Düsenwand 11auf, die wiederum eine innere Wandfläche 12 und eine äußere Düsenwandfläche 13 umfasst. Durch den Propeller 33 ist eine vertikale Mittenlinie 34 und eine horizontale Mittenlinie 35 gezeichnet. Da die Vordüse 10 konzentrisch zum Propeller 33 angeordnet ist, sind die Mittenlinie 34, 35 ebenfalls Mittenlinie für die Vordüse 10. Im Schnittpunkt der bei- den Mittenlinie 34, 35 liegt die Propellerachse 32. Bei einer gedachten Teilung der Vordüse 10 durch die vertikale Mittenlinie 34 ist die linke Vordüsenhälfte die propelleraufschlagende Seite 14 der Vordüse 10 und die rechte Vordüsenhälfte die propellerabschlagende Seite 15 der Vordüse 10.

Auf der propelleraufschlagenden Seite 14 der Vordüse 10 (in Bezug auf einen rechtsdrehenden Propeller) sind jeweils zwischen dem Wellenlager 31 und der Innenseite 12 der Vordüsenwand 11verlaufend angeordnete Innen-Fins 21a, 21b, 21c vorgese- hen. Auf der propellerabschlagenden Seite 15, und zwar oberhalb der horizontalen Mittenlinie 35, ist ein weiterer Innen-Fin 21d angebracht, der ebenfalls zwischen Wel- lenlager 31 und Vordüsenwand 11verläuft. Die Innen-Fins 21a, 21b, 21c, 21d sind je- weils am Wellenlager 31 und an der Vordüse 10 befestigt. Von der äußeren Vordüsenwandfläche 13 stehen vier Außen-Fins 20a, 20b, 20c, 20d nach außen von der Vordüse 10 ab. Die Außen-Fins 20a, 20b, 20c, 20d sind jeweils in Verlängerung der Innen-Fins 21a, 21b, 21c, 21d angeordnet. Die Außen-Fins 20a, 20b, 20c, 20d und auch die Innen-Fins 21a, 21b, 21c, 21d sind allesamt radial zur Propellerachse 32 bzw. Rotationsachse der Vordüse angeordnet und verlaufen entsprechend in Radialrichtung zur Propellerachse 32. Die Längsachse der Innen-Fins 21a, 21b, 21c, 21d entspricht in einer gedachten Verlängerung in etwa der Längsachse der Außen-Fins 20a, 20b, 20c, 20d. Somit stellen die einzelnen Fin-Paare 20a, 21a; 20b, 21b; 20c, 21c; 20d, 21d jeweils einen Gesamt-Fin dar. D. h., sie wirken strömungstechnisch in etwa wie ein durchgehender Fin, sind jedoch de facto von der Vordüse 10 unterbrochen und jeweils daran befestigt (beispielsweise durch Schweißen bzw. durch Verschweißung mit der Vordüse). Hierdurch erhält die Vorrichtung 100 bei relativ großer Länge der Gesamt-Fins eine hohe Stabilität.

Insgesamt sind auf der propelleraufschlagenden Seite 14 drei Gesamt-Fins und auf der propellerabschlagenden Seite 15 ein Gesamt-Fin angeordnet. Auf der propellerabschlagenden Seite 15, und zwar unterhalb der horizontalen Mittenlinie 35, ist ferner eine Stabilisierungsstrebe 22 vorgesehen, die zwischen Wellenlager 31 und Vordüse 10 verläuft und mit beiden verbunden ist. Diese Stabilisierungsstrebe 22 ist derart gestaltet, dass sie als Druck- bzw. Zugstab wirkt und die Vordüse 10 mit dem Schiffskörper befestigt und diese stabilisiert. Die Stabilisierungsstrebe 22 ist nicht als Fin ausgebildet, d. h. sie weist kein Tragflügelprofil o. dgl. auf, sondern ist derart gestaltet, dass sie die Strömung möglichst wenig beeinflusst. Die Stabilisierungsstrebe 22 weist gegenüber den Fins 20a, 20b, 20c, 20d, 21a, 21b, 21c, 21d eine größere Profilbreite auf.

Die Außen-Fins 20a, 20b, 20c, 20d weisen jeweils ein erstes Ende 201 auf, das an der Außenwandfläche 13 der Vordüse 10 angeordnet und mit der Vordüse 10 verbunden ist. Ferner weisen die Außen-Fins ein, dem ersten Ende 201 gegenüberliegendes zweites Ende 202 auf, das als freies Ende ausgebildet ist. Seitlich von dem zweiten Ende 202 stehen jeweils Fin-Endstücke 23 ab. In der Darstellung in der Fig. 6 weisen die Fin-Endstücke 23 jeweils zur unteren Seite der Außen-Fins 20a, 20b, 20c, welches die Saugseite darstellt. Beim Außen-Fin 20d sind am freien Ende 202 zwei Fin-Endstücke 23, die symmetrisch zueinander angeordnet sind, vorgesehen. Ein Fin-Endstück 23 steht zur oberen Seite und eins zur unteren Seite des Außen-Fins 20d ab. Die Fin-Endstücke 23 wirken als "Winglets" und verringern das Auftreten von sogenannten Ablöseverwirbelungen und von Kavitation im Bereich der freien Enden 202 der Außen-Fins 20a, 20b, 20c, 20d. Die Fin-Endstücke 23 gehen jeweils unter einem Radius in den jeweiligen Außen-Fin 20a, 20b, 20c, 20d über.

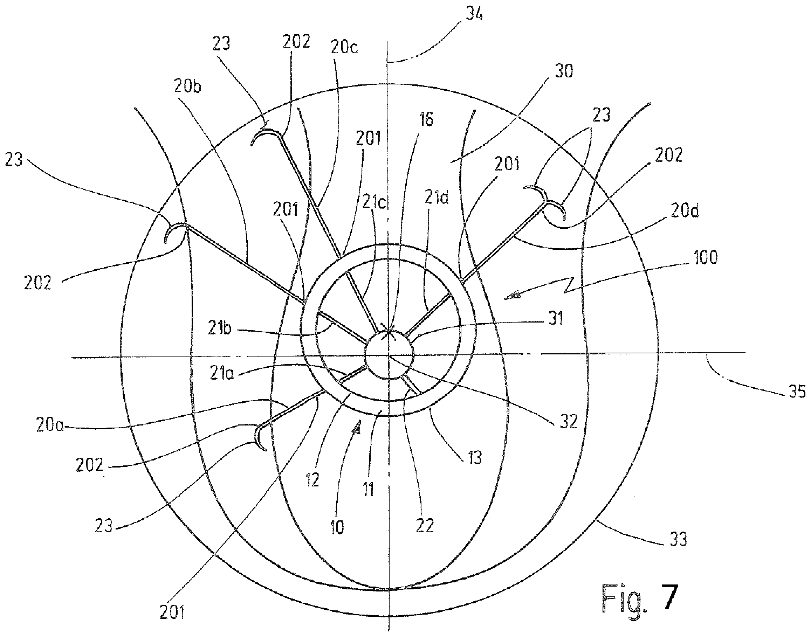

Fig. 7 zeigt eine ähnliche Darstellung wie die Fig. 6. Bei der Ausführungsform gemäß Fig. 7 ist im Unterschied zu Fig. 6 die Vordüse 10 mit ihrer Rotationsachse 16, die gleichzeitig auch die Längsachse der Vordüse 10 darstellt, gegenüber der Propellerachse 32 nach oben verschoben. Entsprechend weisen die Innen-Fins 21a, 21b, 21c, 21d unterschiedliche Längen auf, wohingegen bei der Darstellung aus der Fig. 6 die Innen-Fins 21a, 21b, 21c, 21d alle gleiche Längen aufweisen. Auch die Stabilisierungsstrebe 22 ist gegenüber der Ausführungsform aus der Fig. 6 verkürzt. Bei der Darstellung aus der Fig. 7 weisen ferner auch die Außen-Fins 20a, 20b, 20c, 20d unterschiedliche Längen auf, wohingegen bei der Darstellung aus der Fig. 6 die Außen-Fins 20a, 20b, 20c, 20d jeweils gleiche Längen aufweisen. Sowohl bei der Ausführungsform aus der Fig. 6 als auch bei der Ausführungsform aus der Fig. 7 ist der Radius des Propellers 33 jeweils größer als die Länge der (längsten) Gesamt-Fins. Bei der Ausführungsform aus der Fig. 7 ist die Länge der längsten Gesamt-Fins (beispielsweise zusammengesetzt aus Außen-Fin 20c und Innen-Fin 21c) länger als die Gesamt-Fins aus der Fig. 6.

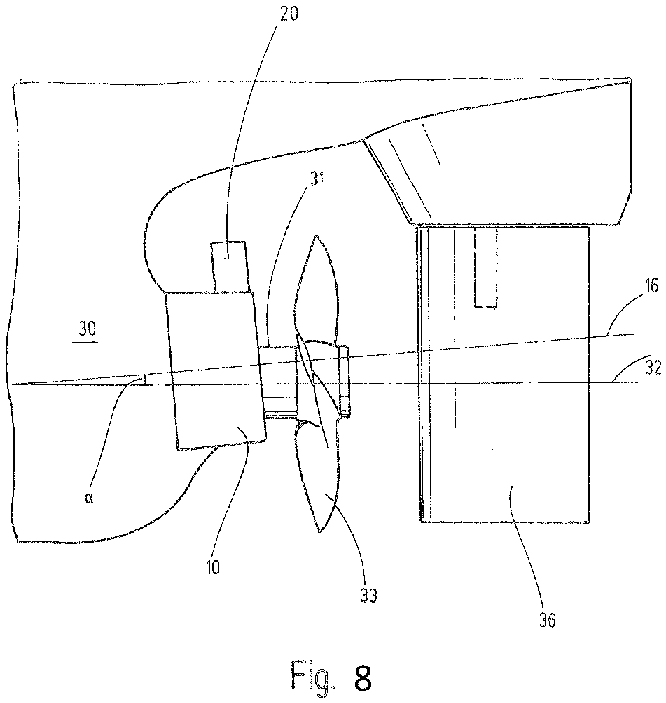

Fig. 8 zeigt eine Seitenansicht auf den unteren Heckabschnitt eines Schiffes. Aus dem Heck eines Schiffskörpers 30 steht in etwa horizontal ein Wellenlager 31, welches als Stevenrohr ausgebildet ist, hervor, in dem eine Propellerwelle (hier nicht dargestellt) angeordnet ist. Die Propellerwelle verläuft entlang einer Propellerachse 32. Am Ende des Wellenlagers 31 ist ein Propeller 33 vorgesehen. In Fahrtrichtung vor dem Propeller 33 ist ferner eine Vordüse 10 angeordnet. Mittig durch die rotationssymmetrisch ausgebildete Vordüse 10 verläuft die Rotations- bzw. Längsachse 16. Die Vordüse 10 ist mit ihrer Rotationsachse 16 gegenüber der Propellerachse 32 nach oben verschoben angeordnet. Ferner steht die Rotationsachse 16 schräg unter einem Winkel a zur Propellerachse 32. D. h.,die Vordüse 10 ist mit ihrem in Fahrtrichtung gesehen vorderen oberen Randbereich nach vorne unten geneigt bzw. gekippt gegenüber der Propellerachse 32 ausgerichtet bzw. angeordnet. Im oberen Bereich der Vordüse 10 steht ein Außen-Fin 20 nach oben hin von der Vordüse 10 ab. Der Außen-Fin 20 ist im in Fahrtrichtung betrachtet hinteren, dem Propeller 33 zugewandten Bereich der Vordüse 10 angeordnet. In Fahrtrichtung hinter dem Propeller 33 ist ein Ruder 36 zum Manövrieren des Schiffes vorgesehen.

Fig. 9 zeigt eine perspektivische Ansicht einer weiteren Ausführungsform der erfindungsgemäßen Vorrichtung 100. Auch diese Vorrichtung 100 umfasst einen in Umfangsrichtung in sich geschlossenen Düsenring bzw. eine Vordüse 10 und vier Außen-Fins 20a bis 20d sowie vier Innen-Fins 21a bis 21d, wobei jeweils ein Finpaar 20a, 21a; 20b, 21b; 20c, 21c; 20d, 21d einen Gesamt-Fin bildet. Die einzelnen Fins 20a bis 20d; 21a bis 21d weisen jeweils ein Querschnittsprofil, in der Art wie es in Fig. 5 dargestellt ist, auf. Insbesondere umfasst jede der Fins 20a bis 20d; 21a bis 21d eine Saugseite 203 und eine Druckseite 204. Die Fins 20a bis 20d; 21a bis 21d sind jeweils im hinteren Bereich der Vordüse 10 angeordnet. Die Darstellung in Fig. 9 zeigt eine Art Explosionsdarstellung, so dass die einzelnen Fins 20a bis 20d; 21a bis 21d nicht durchgehend in ihrem an die Vordüse 10 angeschlossenen Zustand dargestellt sind. Sowohl die Außen Fins 20a bis 20d als auch die Innen-Fins 21a bis 21d sind in Fahrtrichtung 37 betrachtet im hinteren Bereich der Vordüse 10 angeordnet. Insbesondere ist der hintere Bereich nicht länger als 70 %, bevorzugt 55 %, der Gesamtlänge der Vordüse 10 in Fahrtrichtung betrachtet. Die Vordüse 10 in der Fig. 9 ist durchsichtig dargestellt, so dass aus Übersichtlichkeitsgründen die Außen-Fins 20a bis 20d und die Innen-Fins 21a bis 21d jeweils vollständig erkennbar sind.

Die Fin-Endstücke 23, die an jedem der zweiten Enden 202 der Außen-Fins 20a bis 20d angebracht sind, sind in der Art von Platten ausgebildet und stehen einseitig seitlich von den Außen-Fins 20a bis 20d ab. Die der Vorderkante bzw. vorderen Stirnseite 205 der Außen-Fins 20a-20d zugewandte Kante 231 der als Platten ausgebildeten Fin-Endstücke 23 verläuft zur Hauptanströmungsrichtung 18 der Vordüse 10 seitlich und leicht schräg nach hinten. Die beiden seitlichen Kanten 232 der Fin-Endstücke 23 sind in etwa parallel zur Hauptanströmungsrichtung 18 ausgerichtet, während die Hinterkante 233 der Fin-Endstücke 23 im Wesentlichen orthogonal zu der Hauptanströmungsrichtung 18 verläuft. In Bezug auf die Längsrichtung der Außen-Fins 20a bis 20d stehen die Fin-Endstücke 23 unter einem Winkel von 90° bis 120° nach außen ab, wobei die Fin-Endstücke 23 im Falle eines rechtsdrehenden Propellers seitlich von den Außen-Fins 20a bis 20d in Propellerdrehrichtung vorstehen. Bei der Vorrichtung 100 aus der Fig. 9 weisen ferner die Innen-Fins 21a bis 21d jeweils eine größere Länge auf als die Außen-Fins 20a bis 20d. Ferner sind sämtliche Außen-Fins 20a bis 20d in Bezug auf ihre Länge, Breite und Tiefe und auch Profilform gleich dimensioniert. Das Gleiche gilt analog für die Innen-Fins 21a bis 21d. Da die Innen-Fins 21a bis 21d gleiche Längen aufweisen, ist entsprechend die Rotationsachse bzw. Längsachse der Vordüse 10 koaxial zur Propellerachse angeordnet, das heißt, die beiden Achsen liegen aufeinander.

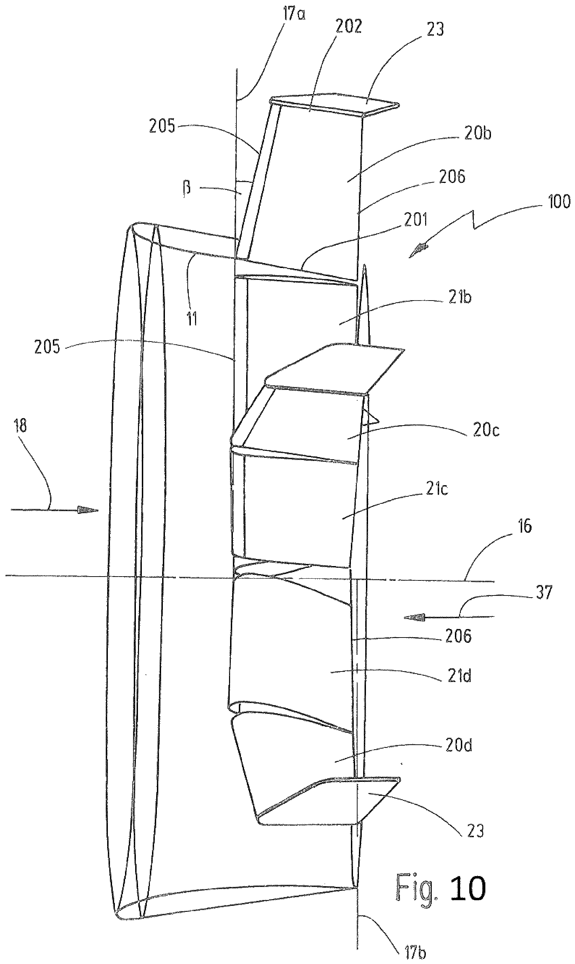

Die Außen-Fins 20a bis 20d sind gepfeilt ausgebildet, wohingegen die Innen-Fins 21a bis 21d ungepfeilt ausgebildet sind. Dies ist im Detail in der Darstellung in der Fig. 10 erkennbar, die die Vorrichtung 100 aus der Fig. 9 in einer Seitenansicht zeigt. In der Darstellung der Fig. 10 ist die Rotationsachse bzw. Längsachse 16 der Vordüse 10 eingezeichnet. Zu der Rotationsachse 16 ist eine erste, nach oben vorstehende Orthogonale 17a und eine zweite nach unten vorstehende Orthogonale 17b eingezeichnet. Die Vordüse 10 in der Fig. 10 ist durchsichtig dargestellt, so dass aus Übersichtlichkeitsgründen die innenliegenden Innen-Fins 21b bis 21d erkennbar sind. Es ist ferner erkennbar, dass die Vorderkante 205 des Innen-Fins 21b im Wesentlichen parallel zu der Orthogonalen 17a angeordnet ist. Ebenso ist erkennbar, dass die Hinterkante 206 des Innen-Fins 21d im Wesentlichen parallel zur Orthogonalen 17b angeordnet ist. Da die Innen-Fins 21b bis 21d gleich ausgebildet sind, gelten diese parallelen Anordnungen analog für sämtliche Innen-Fins 21b bis 21d. Mit anderen Worten ist die Tiefe der Innen-Fins 21b bis 21d in Hautanströmungsrichtung 18 betrachtet bzw. in Fahrtrichtung 37 betrachtet über die Länge der Innen-Fins 21b bis 21d im Wesentlichen konstant. Die Innen-Fins 21b bis 21d sind demnach ungepfeilt ausgebildet.

Im Gegensatz dazu sind die Außen-Fins 20b bis 20d gepfeilt ausgebildet und zwar mit einer Vorderkantenpfeilung aufweisend. Entsprechend ist die Vorderkante 205 des Außen-Fins 20b unter einem Pfeilungswinkel β zur Orthogonalen 17a ausgerichtet. Dies gilt aufgrund der gleichen Ausbildung analog für die übrigen Außen-Fins. Die Hinterkanten 206 der Außen-Fins 20b bis 20d sind wiederum im Wesentlichen parallel zu den Orthogonalen 17a, 17b ausgerichtet, so dass die Hinterkante der Außen-Fins 20b bis 20d nicht gepfeilt, das heißt nicht unter einem Winkel zu den Orthogonalen angestellt, ist. Entsprechend verringert sich die Tiefe der Außen-Fins 20b bis 20d in Fahrtrichtung 37 vom ersten Ende 201 bis zum zweiten Ende 202 betrachtet. Dadurch, dass die Vorderkante 205 gradlinig ausgebildet ist, erfolgt die Verringerung von einem Ende 201 bis zum anderen Ende 202 kontinuierlich. Die in Fig. 10 nicht dargestellten Außen-Fin 20a und Innen-Fin 21a sind analog zu den anderen Innen-Fins 21b bis 21d und Außen-Fins 20b bis 20d ausgebildet.

In der Fig. 10 ist ferner erkennbar, dass sich derAußendurchmesser der Vordüse 10 in Hauptanströmungsrichtung 18 kontinuierlich verkleinert. Ebenso verringert sich der Innendurchmesser der Vordüse 10 in Hauptanströmungsrichtung 18, jedoch nicht kontinuierlich aufgrund der bogenförmigen Ausgestaltung der inneren Vordüsenwandfläche 11in Profilansicht.

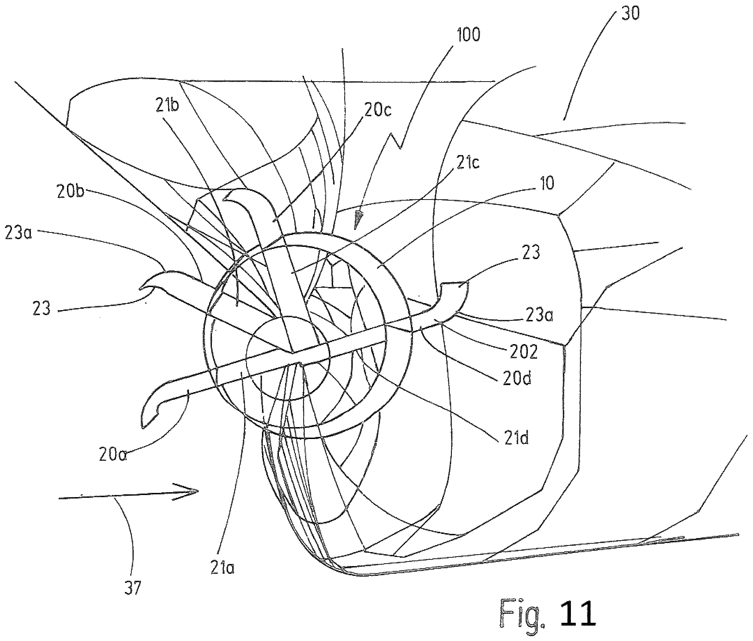

Fig. 11 zeigte eine weitere Ausführungsform einer erfindungsgemäßen Vorrichtung 100, die ähnlich zu derjenigen aus den Fig. 9 und 10 ausgebildet ist. Insbesondere um- fasst diese Vorrichtung 100 ebenso vier Außen-Fins 20a bis 20d und vier Innen-Fins 21a bis 21d, wobei jeweils ein Fin-Paar einen Gesamt-Fin bildet. Sowohl bei der Ausführungsform aus der Fig. 11 als auch bei der Ausführungsform aus den Fig. 9 und 10 sowie 1und 2 sind die Gesamt-Fins asymmetrisch im Inneren der Vordüse 10 verteilt angeordnet.

Im Gegensatz zur Ausführungsform nach den Fig. 9 und 10 geht bei der Ausführungsform aus der Fig. 11 das zweite Ende 202 der Außen-Fins 20a bis 20d nicht unter einem Winkel, sondern unter einen einen Radius aufweisenden Übergang 23a in die Fin-Endstücke 23 über. Ferner verlaufen die Gesamt-Fins bei der Fig. 11 durch die Vordüsen 10 hindurch, das heißt die Gesamt-Fins sind einstückig ausgebildet, wohin- gegen bei der Ausführungsform aus den Fig. 9 und 10 die Gesamt-Fins jeweils zwei- stückig ausgebildet und die Innen-Fins und Außen-Fins jeweils gesondert an der Vor- düse 10 befestigt sind. Ein weiterer Unterschied bei der Ausführungsform gemäß Fig. 11 gegenüber der Ausführungsform gemäß der Fig. 9 und 10 besteht darin, dass sowohl die Innen-Fins 21a bis 21d als auch die Außen-Fins 20a bis 20d gepfeilt ausgebildet sind. Auch hier ist jeweils nur die Vorderkante der Fins gepfeilt ausgebildet, nicht jedoch die Hinterkante. Die Pfeilung der Vorderkanten der Innen-Fins 21a bis 21d erfolgt unter dem gleichen Winkel gegenüber einer Orthogonalen zur Rotationsachse wie bei den Außen-Fins 20a bis 20d, so dass sich eine durchgehende Vorderkantenpfeilung mit einem konstanten Winkel ergibt.

Ferner ist in Fig. 11 erkennbar, dass die Vorrichtung 100 am Schiffskörper 30 angebracht ist, und zwar in Fahrtrichtung 37 am hinteren Ende des Schiffskörpers 30.

### Bezugszeichen liste

- 100: Vorrichtung

- 10: Vordüse
- 11: Vordüsenwand
- 12: innere Vordüsenwandfläche
- 13: äußere Vordüsenwandfläche
- 14: Propelleraufschlagende Seite
- 15: Propellerabschlagende Seite
- 16: Rotationsachse der Vordüse
- 17: Orthogonale zur Rotationsachse
- 18: Hauptanströmungsrichtung

- 20, 20a, 20b, 20c, 20d: Außen-Fins
- 201: erstes Ende Außen-Fin
- 202: zweites Ende Außen-Fin
- 203: Saugseite
- 204: Druckseite
- 205: vordere Stirnseite
- 206: rückwärtige Stirnseite
- 21a, 21b, 21c, 21d: Innen-Fins
- 22: Stabilisierungsstrebe
- 23: Fin-Endstücke
- 23a: Übergang

- 30: Schiffskörper
- 31: Wellenlager
- 32: Propellerachse
- 33: Propeller
- 34: Vertikale Mittenlinie
- 35: Horizontale Mittenlinie
- 36: Ruder
- 37: Fahrtrichtung

- 50: Strömungsleitfläche
- 50a: erster Fin
- 51: Profildicke der Strömungsleitfläche
- 51a: zweiter Fin
- 52: Profileintrittskante
- 53: Profilaustrittskante
- 54: Abstand zwischen Strömungsleitfläche und Propellerachse
- 55: Propellerdurchmesser
- 501: erstes Ende des ersten Fins
- 502: zweites Ende des ersten Fins
- 503: erstes Ende des zweiten Fins
- 504: zweites Ende des zweiten Fins

- α: Schnittwinkel zwischen Rotationsachse und Propellerachse
- β: Pfeilungswinkel

## Patentansprüche

1. Vorrichtung (100) zur Verringerung des Antriebsleistungsbedarfs eines Wasserfahrzeugs, insbesondere eines Schiffes, umfassend eine Strömungsleitfläche (50), wobei von der Strömungsleitfläche (50) mindestens ein erster Fin (50a) vorsteht, wobei ein erstes Ende (201, 501) des ersten Fins (50a) an der Strömungsleitfläche (50) befestigt ist, und ein zweites Ende (502) des ersten Fins (50a) als freies Ende ausgebildet ist,
**dadurch gekennzeichnet,**
**dass** von der Strömungsleitfläche (50) mindestens ein zweiter Fin (51a) vorsteht, wobei ein erstes Ende (503) des zweiten Fins (51a) an der Strömungsleitfläche (50) angeordnet ist, wobei der zweite Fin (51a) mit einem zweiten Ende (504) am Schiffskörper und/oder an einem Wellenlager (31), insbesondere Stevenrohr, welches zur Lagerung einer Propellerwelle eines Propellers (33) des Wasserfahrzeuges ausgebildet ist, befestigt ist, wobei die Länge des ersten Fins (50a) mindestens eineinhalbmal so groß ist wie die Länge des zweiten Fins (51a).

2. Vorrichtung gemäß Anspruch 1,
**dadurch gekennzeichnet,**
**dass** die Strömungsleitfläche (50) vor einem Propeller (33) angeordnet ist, wo- bei die Strömungsleitfläche (50) beabstandet zu dem Propeller (33) angeordnet ist, wobei die Strömungsleitfläche (50) beabstandet zu einem Wellenlager (31), insbesondere Stevenrohr, welches zur Lagerung einer Propellerwelle des Propellers (33) des Wasserfahrzeuges ausgebildet ist, angeordnet ist, und/oder dass der Abstand zwischen einer Propellerachse (32) und dem ersten Ende (501) des ersten Fins (50a) ist kleiner als der Abstand zwischen der Propellerachse (32) und dem zweiten Ende (502) des ersten Fins (50a), und/oder dass der erste Fin (50a) eine größte Profildicke (51) aufweist, und die größte Profildicke (51) des ersten Fins (50a) weniger als 50 %, bevorzugterweise weniger als 25 %, sowie besonders bevorzugterweise weniger als 15 %, des Abstands zwischen dem ersten Ende (501) und dem zweiten Ende (502) des ersten Fins (50a) beträgt.

3. Vorrichtung gemäß Anspruch 1oder 2,
**dadurch gekennzeichnet,**
**dass** die Strömungsleitfläche (50) eine stirnseitige Profileintrittskante (52) aufweist, welche vom Propeller (33) weggerichtet ist, und dass die Strömungsleitfläche (50) eine stirnseitige Profilaustrittskante (53) aufweist, welche zum Propeller (33) hingerichtet ist, wobei der Abstand zwischen der Propellerachse (32) und der Strömungsleitfläche (50) im Bereich der Profileintrittskante (52) kleiner oder größer ist als der Abstand zwischen der Propellerachse (32) und der Strömungsleitfläche (50) im Bereich der Profilaustrittskante (53), und/oder dass der kürzeste Abstand (54) zwischen Strömungsleitfläche (50) und Propellerachse (32) kleiner als die Hälfte eines Propellerdurchmessers (55) ist.

4. Vorrichtung gemäß einem der vorhergehenden Ansprüche,
**dadurch gekennzeichnet,**
**dass** der erste Fin (50a) und/oder der zweite Fin (51a) radial zur Propellerachse (32) eines Propellers (33) des Wasserfahrzeugs angeordnet sind.

5. Vorrichtung gemäß Anspruch 4, **dadurch**
**gekennzeichnet,**
**dass** der erste Fin (50a) in Verlängerung des zweiten Fins (51a) angeordnet ist und beide zusammen einen Gesamt-Fin bilden, wobei bevorzugt die Länge des Gesamt-Fins größer oder kleiner als der Radius eines Propellers (33) des Wasserfahrzeugs ist, besonders bevorzugt beträgt die Länge des Gesamt-Fins maximal 90 % des Radius des Propellers (33), ganz besonders bevorzugt beträgt die Länge des Gesamt-Fins maximal 75 % des Radius des Propellers (33).

6. Vorrichtung gemäß einem der vorhergehenden Ansprüche,
**dadurch gekennzeichnet,**
**dass** der erste Fin (50a) und/oder der zweite Fin (51a) unter einem Anstellwinkel zur Propellerachse (32) angeordnet sind, wobei insbesondere der erste Fin (50a) und der zweite Fin (51a) unterschiedliche Anstellwinkel aufweisen.

7. Vorrichtung gemäß einem der vorhergehenden Ansprüche,
**dadurch gekennzeichnet,**
**dass** der erste Fin (50a) ein freies Ende (502) aufweist, an welchem ein vom ersten Fin (50a) abstehendes Fin-Endstück (23) vorgesehen ist, wobei bevorzugt das Fin-Endstück (23) unter einem Radius oder unter einem Winkel in das freie Ende des ersten Fins (50a) übergeht.

8. Vorrichtung gemäß Anspruch 7,
**dadurch gekennzeichnet,**
**dass** das Fin-Endstück (23) nur zu einer Seite oder zu beiden Seiten des ersten Fins (50a) vom ersten Fin (50a) absteht, wobei im Falle einer einseitigen Ausbildung das Fin-Endstück (23) bevorzugt zur Saugseite (203) des mindestens einen ersten Fins (50a) absteht.

9. Vorrichtung gemäß einem der vorhergehenden Ansprüche,
**dadurch gekennzeichnet,**
**dass** mehrere Fins (20a, 20b, 20c, 20d, 50a, 21a, 21b, 21c, 21d, 51a) vorgesehen sind, wobei insbesondere auf der propelleraufschlagenden Seite (14) mehr Fins (20a, 20b, 20c, 20d, 50a, 21a, 21b, 21c, 21d, 51a) angeordnet sind als auf der propellerabschlagenden Seite (15) und/oder, dass die Fins (20a, 20b, 20c, 20d, 50a, 21a, 21b, 21c, 21d, 51a) derart angeordnet sind, dass diese ein asymmetrisches Fin-System bilden.

10. Vorrichtung gemäß einem der Ansprüche 4 bis 9,
**dadurch gekennzeichnet,**
**dass** die Länge des ersten Fins (50a) mindestens doppelt so groß ist wie die Länge des zweiten Fins (51a).

11. Vorrichtung gemäß einem der vorhergehenden Ansprüche,
**dadurch gekennzeichnet,**
**dass** die größte Profildicke der Stömungsleitfläche (50) weniger als 10 %, bevorzugt weniger als 7,5 %, besonders bevorzugt weniger als 6 %, der Länge der Stömungsleitfläche (50) beträgt, und/oder dass zwischen der Stömungsleitfläche (50) und der Propellerachse (32) mindestens eine Stabilisierungsstrebe (22) zur Stabilisierung der Stömungsleitfläche (50) angeordnet ist, wobei die Stabilisierungsstrebe (22) mit einem Ende an der Stömungsleitfläche (50) und mit einem anderen Ende an einem Wellenlager (31), insbesondere Stevenrohr, welches zur Lagerung einer Propellerwelle eines Propellers (33) des Wasserfahrzeuges ausgebildet ist, befestigt ist, wobei die Stabilisierungsstrebe (22) mit oder ohne Fin-Profil ausgebildet sein kann.

12. Vorrichtung gemäß einem der vorhergehenden Ansprüche,
**dadurch gekennzeichnet,**
**dass** der erste Fin (50a) und/oder der zweite Fin (51a) gepfeilt ausgebildet sind.

13. Vorrichtung gemäß Anspruch 12, rückbezogen auf Anspruch S,
**dadurch gekennzeichnet,**
**dass** der Gesamt-Fin durchgehend gepfeilt ausgebildet ist.

14. Vorrichtung gemäß einem der vorhergehenden Ansprüche,
**dadurch gekennzeichnet,**
**dass** die Strömungsleitfläche (50) umfänglich offen oder geschlossen ausgebildet ist, und/oder dass die Strömungsleitfläche (50) gerade, insbesondere in einer geraden Ebene ausgebildet ist, und/oder dass die Strömungsleitfläche (50) bogenförmig, insbesondere konvex gegenüber der Propellerachse (32) ausgebildet ist, und/oder dass die Strömungsleitfläche (50) bogenförmig und umfänglich offen ausgebildet ist, wobei eine Bogenlänge der Strömungsleitfläche (50) bei Querschnittsbetrachtung kleiner als 80 %, bevorzugt kleiner als 60 %, besonders bevorzugt kleiner als 40 %, ganz besonders bevorzugt kleiner als 30, % des Umfangs der gedanklich umfänglich geschlossenen Strömungsleitfläche (50) ist.

15. Vorrichtung gemäß einem der vorhergehenden Ansprüche,
**dadurch gekennzeichnet,**
**dass** die Strömungsleitfläche (50) als Düse, vorzugsweise als Vordüse (10), ausgebildet ist, wobei bevorzugt der Durchmesser der Vordüse (10) weniger als 70 %, besonders bevorzugt weniger als 50 %, ganz besonders bevorzugt weniger als 35 %, des Durchmessers eines Propellers (33) des Wasserfahrzeugs beträgt.

## Claims

1. Device (100) for reducing the propulsion power requirement of a watercraft, in particular a ship, comprising a flow guide surface (50), wherein at least one first fin (50a) projects from the flow guide surface (50), wherein a first end (201, 501) of the first fin (50a) is attached to the flow guide surface (50), and a second end (502) of the first fin (50a) is formed as a free end,
**characterized in that**
at least one second fin (51a) projects from the flow guide surface (50), wherein a first end (503) of the second fin (51a) is arranged at the flow guide surface (50), wherein the second fin (51a) is attached with a second end (504) to the hull and / or to a shaft bearing (31), in particular the stern tube, which is designed for bearing a propeller shaft of a propeller (33) of the watercraft, wherein the length of the first fin (50a) is at least one and a half times the length of the second fin (51a).

2. Device according to claim 1,
**characterized in that**
the flow guide surface (50) is arranged in front of a propeller (33), wherein the flow guide surface (50) is arranged spaced apart from the propeller (33), wherein the flow guide surface (50) is arranged spaced apart from a shaft bearing (31), in particular a stern tube, which is designed for bearing a propeller shaft of the propeller (33) of the watercraft, and / or **in that** the distance between a propeller axis (32) and the first end (501) of the first fin (50a) is smaller than the distance between the propeller axis (32) and the second end (502) of the first fin (50a) and/or that the first fin (50a) has a largest profile thickness (51), and the largest profile thickness (51) of the first fin (50a) is less than 50%, preferably less than 25%, and more preferably less than 15%, of the distance between the first end (501) and the second end (502) of the first fin (50a).

3. Device according to claim 1 or 2,
**characterized in that**
the flow guide surface (50) has a frontal profile leading edge (52), which is directed away from the propeller (33), and **in that** the flow guide surface (50) has a frontal profile trailing edge (53), which is directed towards the propeller (33), wherein the distance between the propeller axis (32) and the flow guide surface (50) in the region of the profile leading edge (52) is smaller or larger than the distance between the propeller axis (32) and the flow guide surface (50) in the region of the profile trailing edge (53), and/or that the shortest distance (54) between the flow guide surface (50) and the propeller axis (32) is smaller than half of a propeller diameter (55).

4. Device according to one of the preceding claims,
**characterized in that**
the first fin (50a) and / or the second fin (51a) are arranged radially to the propeller axis (32) of a propeller (33) of the watercraft.

5. Device according to claim 4,
**characterized in that**
the first fin (50a) is arranged in extension of the second fin (51a) and both together form an overall fin, wherein preferably the length of the overall fin is larger or smaller than the radius of a propeller (33) of the watercraft, particularly preferably the length of the overall fin is at most 90% of the radius of the propeller (33), most preferably the length of the overall fin is at most 75% of the radius of the propeller (33).

6. Device according to one of the preceding claims,
**characterized in that**
the first fin (50a) and / or the second fin (51a) are arranged at an angle of attack to the propeller axis (32), wherein in particular the first fin (50a) and the second fin (51a) have different angles of attack.

7. Device according to one of the preceding claims,
**characterized in that**
the first fin (50a) has a free end (502), on which a fin end piece (23) protruding from the first fin (50a) is provided, wherein the fin end piece (23) preferably merges at a radius or at an angle into the free end of the first fin (50a).

8. Device according to claim 7,
**characterized in that**
the fin end piece (23) protrudes only on one side or on both sides of the first fin (50a) from the first fin (50a), wherein in the case of a one-sided design, the fin end piece (23) preferably protrudes toward the suction side (203) of the at least one first fin (50a).

9. Device according to one of the preceding claims,
**characterized in that**
a plurality of fins (20a, 20b, 20c, 20d, 50a, 21a, 21b, 21c, 21d, 51a) are provided, wherein in particular on the propeller up-turning side (14) more fins (20a , 20b, 20c, 20d, 50a, 21a, 21b, 21c, 21d, 51a) are arranged than on the propeller down-turning side (15) and / or **in that** the fins (20a, 20b, 20c, 20d, 50a, 21a, 21b , 21c, 21d, 51a) are arranged in such a way that they form an asymmetrical fin system.

10. Device according to one of claims 4 to 9,
**characterized in that**
the length of the first fin (50a) is at least twice as large as the length of the second fin (51a).

11. Device according to one of the preceding claims,
**characterized in that**
the largest profile thickness of the flow guide surface (50) is less than 10%, preferably less than 7.5%, particularly preferably less than 6%, of the length of the flow guide surface (50), and / or **in that** between the flow guide surface (50) and the propeller axis (32) at least one stabilizing strut (22) for stabilizing the flow guide surface (50) is arranged, wherein the stabilizing strut (22) is fixed with one end to the flow guide surface (50) and with another end to a shaft bearing (31), in particular a stern tube, which is designed for bearing a propeller shaft of a propeller (33) of the watercraft, wherein the stabilizing strut (22) can be formed with or without a fin profile.

12. Device according to one of the preceding claims,
**characterized in that**
the first fin (50a) and / or the second fin (51a) are formed swept.

13. Device according to claim 12, referring to claim 5,
**characterized in that**
the overall fin is formed continuously swept.

14. Device according to one of the preceding claims,
**characterized in that**
the flow guide surface (50) is formed circumferentially open or closed, and/or **in that** the flow guide surface (50) is formed straight, in particular in a straight plane, and / or **in that** the flow guide surface (50) is formed in an arched manner, in particular convex, relative to the propeller axis (32), and / or **in that** the flow guide surface (50) is formed in an arched manner and circumferentially open, wherein an arc length of the flow guide surface (50) in cross-sectional view is less than 80%, preferably less than 60%, particularly preferably less than 40%, most preferably less than 30%, of the circumference of the theoretically circumferentially closed flow guide surface (50).

15. Device according to one of the preceding claims,
**characterized in that**
the flow guide surface (50) is formed as a nozzle, preferably as a pre-nozzle (10), wherein preferably the diameter of the pre-nozzle (10) is less than 70%, particularly preferably less than 50%, most preferably less than 35%, of the diameter of a propeller (33) of the watercraft.

## Revendications

1. Dispositif (100) de réduction de besoin de puissance de propulsion d'une embarcation, en particulier d'un bateau, comprenant une surface de guidage d'écoulement (50), dans lequel au moins une première dérive (50a) fait saillie de la surface de guidage d'écoulement (50), dans lequel une première extrémité (201, 501) de la première dérive (50a) est fixée sur la surface de guidage d'écoulement (50) et une seconde extrémité (502) de la première dérive (50a) est conçue comme extrémité libre,
**caractérisé en ce**
**qu'**au moins une seconde dérive (51a) fait saillie de la surface de guidage d'écoulement (50), dans lequel une première extrémité (503) de la seconde dérive (51a) est disposée sur la surface de guidage d'écoulement (50), dans lequel la seconde dérive (51a) est attachée par une seconde extrémité (504) à la coque et/ou à un palier d'arbre (31), en particulier un tube d'étambot qui est formé pour supporter un arbre d'hélice d'une hélice (33) de l'embarcation, dans lequel la longueur de la première dérive (50a) fait au moins une fois et demie la longueur de la seconde dérive (51a).

2. Dispositif selon la revendication 1, **caractérisé en ce que** la surface de guidage d'écoulement (50) est disposée devant une hélice (33), dans lequel la surface de guidage d'écoulement (50) est disposée à distance de l'hélice (33), dans lequel la surface de guidage d'écoulement (50) est disposée à distance d'un palier d'arbre (31), en particulier un tube d'étambot qui est formé pour supporter un arbre d'hélice d'une hélice (33) de l'embarcation, et/ou que la distance entre l'axe d'hélice (32) et la première extrémité (501) de la première dérive (50a) est inférieure à la distance entre l'axe d'hélice (32) et la seconde extrémité (502) de la première dérive (50a), et/ou que la première dérive (50a) présente la plus grande épaisseur de profilé (51) et la plus grande épaisseur de profilé (51) de la première dérive (50a) est inférieure à 50 %, de manière plus préférée inférieure à 25 %, ainsi que de manière particulièrement plus préférée inférieure à 15 % de la distance entre la première extrémité (501) et la seconde extrémité (502) de la première dérive (50a).

3. Dispositif selon la revendication 1 ou 2, **caractérisé en ce que** la surface de guidage d'écoulement (50) présente un bord d'attaque profilé (52) côté avant qui est éloigné de l'hélice (33) et que la surface de guidage d'écoulement (50) présente un bord de fuite profilé (53) côté avant qui est dirigé vers l'hélice (33), dans lequel la distance entre l'axe d'hélice (32) et la surface de guidage d'écoulement (50) au niveau du bord d'attaque profilé (52) est plus petite ou plus grande que la distance entre l'axe d'hélice (32) et la surface de guidage d'écoulement (50) au niveau du bord de fuite profilé (53), et/ou que la distance la plus courte (54) entre la surface de guidage d'écoulement (50) et l'axe d'hélice (32) est inférieure à la moitié d'un diamètre d'hélice (55).

4. Dispositif selon l'une des revendications précédentes, **caractérisé en ce que** la première dérive (50a) et/ou la seconde dérive (51a) est/sont disposée(s) radialement à l'axe d'hélice (32) d'une hélice (33) de l'embarcation.

5. Dispositif selon la revendication 4, **caractérisé en ce que** la première dérive (50a) est disposée dans le prolongement de la seconde dérive (51a) et les deux forment ensemble une dérive complète, dans lequel de préférence la longueur de la dérive complète est plus grande ou plus petite que le rayon d'une hélice (33) de l'embarcation, particulièrement de préférence, la longueur de la dérive complète fait au maximum 90 % du rayon de l'hélice (33), tout particulièrement de préférence, la longueur de la dérive complète fait au maximum 75 % du rayon de l'hélice (33).

6. Dispositif selon l'une des revendications précédentes, **caractérisé en ce que** la première dérive (50a) et/ou la seconde dérive (51a) est/sont disposée(s) dans un angle d'incidence par rapport à l'axe d'hélice (32), dans lequel en particulier la première dérive (50a) et la seconde dérive (51a) présentent différents angles d'incidence.

7. Dispositif selon l'une des revendications précédentes, **caractérisé en ce que** la première dérive (50a) présente une extrémité libre (502) sur laquelle une pièce d'extrémité de dérive (23) en saillie de la première dérive (50a) est prévue, dans lequel de préférence la pièce d'extrémité de dérive (23) passe, dans un rayon ou un angle, dans l'extrémité libre de la première dérive (50a).

8. Dispositif selon la revendication 7, **caractérisé en ce que** la pièce d'extrémité de dérive (23) fait saillie de la première dérive (50a) que d'un côté ou des deux côtés de la première dérive (50a), dans lequel, en cas d'une formation d'un seul côté, la pièce d'extrémité de dérive (23) fait saillie de préférence en direction du côté d'aspiration (203) de l'au moins une première dérive (50a).

9. Dispositif selon l'une des revendications précédentes, **caractérisé en ce que** plusieurs dérives (20a, 20b, 20c, 20d, 50a, 21a, 21b, 21c, 21d, 51a) sont prévues, dans lequel en particulier plus de dérives (20a, 20b, 20c, 20d, 50a, 21a, 21b, 21c, 21d, 51a) sont disposées sur le côté de l'hélice tournant vers le haut (14) que sur le côté de l'hélice tournant vers le bas (15) et/ou que les dérives (20a, 20b, 20c, 20d, 50a, 21a, 21b, 21c, 21d, 51a) sont ainsi disposées que celles-ci forment un système de dérive asymétrique.

10. Dispositif selon l'une des revendications 4 à 9, **caractérisé en ce que** la longueur de la première dérive (50a) est au moins deux fois comme la longueur de la seconde dérive (51a).

11. Dispositif selon l'une des revendications précédentes, **caractérisé en ce que** la plus grande épaisseur de profilé de la surface de guidage d'écoulement (50) fait moins de 10 %, de préférence moins de 7,5 %, particulièrement de préférence moins de 6 % de la longueur de la surface de guidage d'écoulement (50), et/ou qu'entre la surface de guidage d'écoulement (50) et l'axe d'hélice (32) au moins une barre de stabilisation (22) est disposée pour stabiliser la surface de guidage d'écoulement (50), dans lequel la barre de stabilisation (22) est fixée par une extrémité à la surface de guidage d'écoulement (50) et par une autre extrémité à un palier d'arbre (31), en particulier un tube d'étambot qui est formé pour supporter un arbre d'hélice d'une hélice (33) de l'embarcation, dans lequel la barre de stabilisation (22) peut être conçue avec ou sans profilé de dérive.

12. Dispositif selon l'une des revendications précédentes, **caractérisé en ce que** la première dérive (50a) et/ou la seconde dérive (51a) est/sont conçue(s) en flèche.

13. Dispositif selon la revendication 12, rapporté à la revendication 5, **caractérisé en ce que** la dérive complète est conçue en flèche de manière continue.

14. Dispositif selon l'une des revendications précédentes, **caractérisé en ce que** la surface de guidage d'écoulement (50) est conçue ouverte ou fermée sur le pourtour, et/ou que la surface de guidage d'écoulement (50) est conçue droite, en particulier dans un plan droit, et/ou que la surface de guidage d'écoulement (50) est arquée, en particulier convexe par rapport à l'axe d'hélice (32), et/ou que la surface de guidage d'écoulement (50) est arquée et ouverte sur le pourtour, dans lequel une longueur d'arc de la surface de guidage d'écoulement (50), vue en transversale, est inférieure à 80 %, de préférence inférieure à 60 %, particulièrement de préférence inférieure à 40 %, tout particulièrement de préférence inférieure à 30 % du pourtour de la surface de guidage d'écoulement (50) imaginaire fermée sur le pourtour.

15. Dispositif selon l'une des revendications précédentes, **caractérisé en ce que** la surface de guidage d'écoulement (50) est conçue en tant que buse, de préférence en tant que pré-buse (10), dans lequel de préférence, le diamètre de la pré-buse (10) est inférieur à 70 %, particulièrement de préférence inférieur à 50 %, tout particulièrement de préférence inférieur à 35 % du diamètre d'une hélice (33) de l'embarcation.
